# EUROPEAN PATENT APPLICATION

(11) **EP 2 182 397 A1**
(43) Date of publication of application: **05.05.2010**
(21) Application number: 08852270.1
(22) Date of filing: 24.10.2008
(51) Int. Cl.: G02B 6/00

(54) **CUTTING DEVICE OF OPTICAL FIBER AND CUTTING METHOD OF OPTICAL FIBER, AND BLADE MEMBER FOR CUTTING OPTICAL FIBER**

(30) Priority: 21.11.2007 JP 2007301980; 21.11.2007 JP 2007301695
(71) Applicant: Sumitomo Electric Industries, Ltd., Chuo-ku Osaka-shi Osaka 541-0041 (JP); Nippon Telegraph and Telephone Corporation, Chiyoda-ku Tokyo 100-8116 (JP)
(72) Inventor: OHMURA, Masaki, Yokohama-shi Kanagawa 244-8588 (JP); OHTSUKA, Kenichiro, Yokohama-shi Kanagawa 244-8588 (JP); TAMURA, Mitsuaki, Yokohama-shi Kanagawa 244-8588 (JP); SAKAMOTO, Katsuji, Yokohama-shi Kanagawa 244-8588 (JP); KIHARA, Mitsuru, Musashino-shi Tokyo 180-8585 (JP); SON, Hitoshi, Musashino-shi Tokyo 180-8585 (JP); KOYAMA, Ryo, Musashino-shi Tokyo 180-8585 (JP)
(86) International application number: PCT/JP2008/069362
(87) International publication number: WO 2009/066544

(57) **Abstract**

An optical fiber cutting device and method, and optical fiber cutting blade member in which excellent workability is obtained by a simple configuration, and a cost reduction can be attained are provided.

An optical fiber cutting device 10 includes: clamps 20U, 20L which clamp an optical fiber 11 at both axial sides of a to-be-cut portion to fix the optical fiber 11; a blade member 30 which presses a blade edge 31 against the to-be-cut portion of the optical fiber 11 clamped by the clamps 20U, 20L, to provide an initial flaw 11a; an updating mechanism 40 which updates the position of the blade member 30 so that, during a cutting operation, an unused portion of the blade edge 31 is contacted with the optical fiber 11; a pillow member 50 which presses the optical fiber 11 from the side opposite to the initial flaw 11a provided by the blade member 30, to apply a tensile bending force, thereby breaking the optical fiber 11; and a blade pressure setting spring 32 which urges the blade member 30 toward the optical fiber 11 by a predetermined elastic urging force.

## Description

### Technical Field

The present invention relates to an optical fiber cutting device and method for cutting an optical fiber, and an optical fiber cutting blade member.

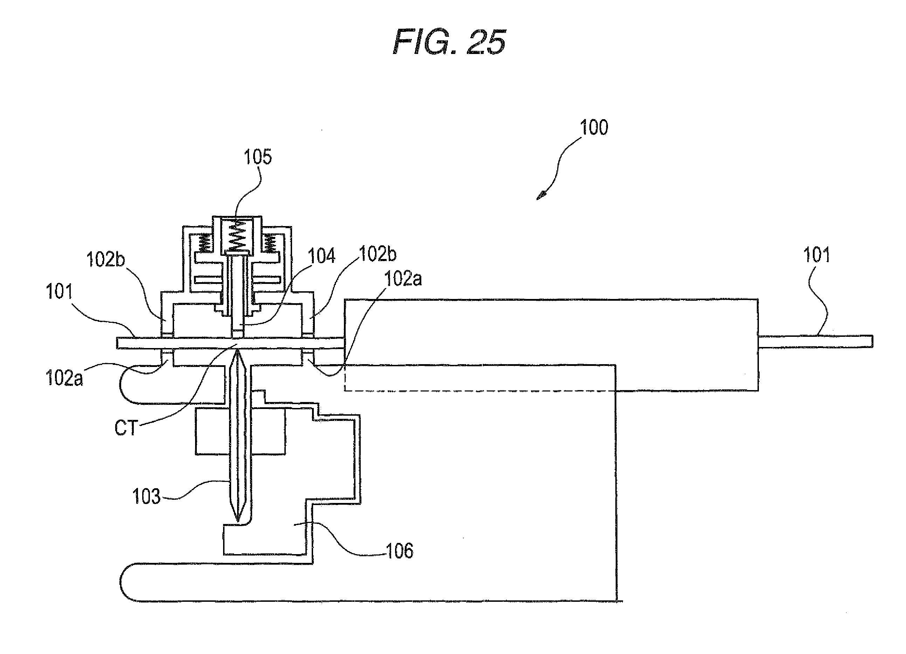

As a device for cutting an optical fiber, an optical fiber cutting device such as shown in Fig. 25 is known (for example, see Patent Reference 1).
As shown in Fig. 25, the optical fiber cutting device 100 disclosed in Patent Reference 1 has clamps 102a, 102b which clamp a coated optical fiber 101 at both sides of a to-be-cut portion CT. The optical fiber cutting device 100 further has a disk-like blade member 103 which is moved in the to-be-cut portion CT in a direction perpendicular to the axis of the optical fiber 101 to cut the coating of the optical fiber 101, thereby providing an initial flaw to the glass fiber. Moreover, the optical fiber cutting device 100 has a pillow 104 which, when an initial flaw is to be provided, pushes the optical fiber from the side opposite to the initial flaw by a spring force of a spring 105.

Patent Reference 1: JP-A-2006-284839

### Disclosure of the Invention

### Problems that the Invention is to Solve

In the above-described optical fiber cutting device 100, since the blade member 103 is moved in the direction perpendicular to the optical fiber 101 to provide an initial flaw to the optical fiber 101, however, a moving mechanism 106 for the blade member 103 is required, and the position of the blade member 103 with respect to the optical fiber 101 must be adequately adjusted. Therefore, the structure of the device is complicated, and the number of components is increased so that the cost of the optical fiber cutting device 100 is increased. Moreover, the device tends to increase in size and weight, and hence the workability is poor.

In the blade member 103, after the same portion of the blade edge which is contacted with the optical fiber 101 is used a predetermined number of times, the blade member 103 is rotated, and a new blade edge is used. However, it is difficult to manage the number of uses of the blade edge. Therefore, there is a case where the same blade edge is used a predetermined number or more of times. In such a case, there is a possibility that an end surface failure such as that crush occurs in the cut portion of the optical fiber, or that the cutting surface angle is increased occurs.

In the case where the blade member 103 provides an initial flaw serving as the breaking origin, to the glass fiber of the optical fiber 101, when a super-hard blade or the like which is as hard as the glass fiber is used, the blade member tends to be disadvantageous in price because such a super-hard blade is expensive.

A method is usually employed in which, after a coating portion is removed, an exposed glass fiber is cut. However, there occurs sometimes a case where the cutting operation is performed on both the coating portion and a glass fiber. In this case, an initial flaw is provided to the surface of the glass fiber simultaneously with the formation of an incision in the coating portion, and hence a cutting operation must be performed in which the cutting property of the coating portion is compatible with the cutting property of the glass fiber.

When a super-hard blade is used in such a cutting operation, however, the coating portion is largely deformed because the edge angle of a super-hard blade edge is usually a blunt angle. When the coating portion is largely deformed, a loss is caused in cutting property, and there is a possibility that an adverse effect is produced.

In such a super-hard blade, a predetermined portion is used a plurality of times. However, it is difficult to manage the number of uses, and hence the management of a blade is hardly performed. Therefore, it may be possible that a glass fiber is cut by a blade in poor conditions. Consequently, a cutting failure such as that a glass fiber fails to be surely cut, or that the condition of a cut terminal is defective may occur.

It is an object of the invention to provide an optical fiber cutting device and method in which excellent workability is obtained by a simple configuration, and a cost reduction can be attained.
It is another object to provide an optical fiber cutting blade member which is economical, which can perform a sure cutting operation, and which is highly reliable.

### Means for Solving the Problems

The optical fiber cutting device of the invention which can solve the above-discussed problems includes: a clamp which clamps an optical fiber at both axial sides of a to-be-cut portion to fix the optical fiber; a blade member which presses a blade edge against the to-be-cut portion of the optical fiber clamped by the clamp, to provide an initial flaw; an updating mechanism which updates a position of the blade member or the clamp so that, during a cutting operation, an unused portion of the blade edge is contacted with the optical fiber; a pillow member which presses the optical fiber from a side opposite to the initial flaw provided by the blade member, to apply a tensile bending force, thereby breaking the optical fiber; and a blade pressure setting spring which urges the blade member toward the optical fiber by a predetermined elastic urging force.

In the optical fiber cutting device of the invention, preferably, the blade member is a single-edged blade having a thickness of 0.2 mm or more and 0.5 mm or less.

In the optical fiber cutting device of the invention, preferably, the elastic urging force exerted by the blade pressure setting spring is 30 gf or more and 200 gf or less.

In the optical fiber cutting device of the invention, preferably, the blade feeding mechanism automatically changes the position of the blade member in conjunction with one cutting operation.

In the optical fiber cutting device of the invention, preferably, the device has optical fiber positioning means for setting an axial position of the to-be-cut portion of the optical fiber.
Preferably, the optical fiber positioning means is detachable from and attachable to a body portion of the optical fiber cutting device.

In the optical fiber cutting device of the invention, preferably, the device has blade member recovering means for recovering a used portion of the blade member.

In the optical fiber cutting device of the invention, preferably, the device has optical fiber recovering means for recovering the cut optical fiber.

In the optical fiber cutting device of the invention, preferably, the device further includes a buffering mechanism which controls a cutting speed of the blade member.
Preferably, the buffering mechanism performs a control so that, when the cutting speed of the blade member exceeds a predetermined value, the initial flaw is not provided.

In the optical fiber cutting device of the invention, preferably, the device further includes a blade member replacement time displaying mechanism which informs of a replacement time of the blade member.

The optical fiber cutting method of the invention has the steps of: clamping an optical fiber at both axial sides of a to-be-cut portion to fix the optical fiber; pressing a blade edge of an unused portion of a blade member against the to-be-cut portion of the optical fiber, by a predetermined elastic urging force to provide an initial flaw; retracting the blade member from the optical fiber, and pressing a pillow member against a side of the optical fiber opposite to the initial flaw to apply a tensile bending force to the optical fiber, thereby breaking the optical fiber; releasing the clamped state of the optical fiber produced by the clamp; and updating a position of the blade member or the clamp so that, in a next cutting operation, an unused portion of the blade edge is contacted with the optical fiber.

In the optical fiber cutting method of the invention, the optical fiber may be a coated optical fiber.

The optical fiber cutting blade member of the invention is an optical fiber cutting blade member for cutting a glass fiber or an optical fiber in which a glass fiber is placed in a coating portion, wherein a composite angle blade having different blade edge angles is formed in a tip end of a body portion.

In the optical fiber cutting blade member of the invention, preferably, the composite angle blade is configured by at least a first angle blade having a large angle, and a second angle blade having an angle which is smaller than the first angle blade.
Preferably, the first angle blade is deformed when the optical fiber is to be provided with an initial flaw.
Preferably, the first angle blade or the second angle blade is placed asymmetrically on both faces of the body portion.

In the optical fiber cutting blade member of the invention, preferably, a surface treatment is applied to at least the first angle blade and the second angle blade.

In the optical fiber cutting blade member of the invention, preferably, the member is formed by using stainless steel as a material.

### Effects of the Invention

According to the invention, the device has the blade member which presses the blade edge against the to-be-cut portion of the optical fiber clamped by the clamp, to provide an initial flaw, and, when the optical fiber is to be cut, the position of the blade member or the clamp is updated so that an unused portion of the blade edge is contacted with the optical fiber. Therefore, it is not required to dispose a mechanism which, during the cutting operation, slides the blade member, and an initial flaw can be provided to the optical fiber by using a general-purpose and economical blade member. As a result, the cutting device can be reduced in size, weight, and cost.

Since the cutting operation is performed by an unused portion of the blade edge, the cutting quality is stabilized. Since the blade edge of the blade member is pressed against the optical fiber by a predetermined elastic urging force, an initial flaw can be provided to the optical fiber by an adequate blade pressure, and it is possible to prevent an excess blade pressure from being applied to the optical fiber. Therefore, an optical fiber can be surely cut without requiring an adjustment of the force of the worker, and the workability is excellent.

Without using a super-hard blade or the like which is as hard as a glass fiber, a cutting operation can be performed in which the cutting property of a coating portion is compatible with the cutting property of the glass fiber. Therefore, a sure cutting operation which is relatively economical can be performed.

### Brief Description of the Drawings

[Fig. 1] Fig. 1(A) is a plan view of an optical fiber cutting device of a first embodiment of the invention, Fig. 1(B) is a side view in the case where a cover is closed, and Fig. 1(C) is a side view in the case where the cover is opened.
[Fig. 2] Fig. 2 is a schematic diagram of a front portion of the optical fiber cutting device.
[Fig. 3] Fig. 3 is a sectional view showing the shape of a blade edge of a blade member.
[Fig. 4] Fig. 4 is a process diagram showing a work of cutting an optical fiber.
[Fig. 5] Fig. 5 is a schematic diagram showing an optical fiber cutting device of a second embodiment of the invention.
[Fig. 6] Fig. 6 is a process diagram showing a work of cutting an optical fiber.
[Fig. 7] Fig. 7(A) is a schematic sectional view of main portions of an optical fiber cutting device of a third embodiment, and Fig. 7(B) is a schematic sectional view of main portions and illustrating a cutting operation at an optimum speed in the optical fiber cutting device of the third embodiment.
[Fig. 8] Fig. 8 is a schematic sectional view of main portions and illustrating a cutting operation at an inadequate speed in the optical fiber cutting device of the third embodiment.
[Fig. 9] Fig. 9(A) is a side view of a blade feeding mechanism, and Fig. 9(B) is a plan view of the blade feeding mechanism.
[Fig. 10] Fig. 10(A) is a side view showing blade member recovering means, and Fig. 10(B) is a plan view as seen in a direction B in Fig. 8(A).
[Fig. 11] Fig. 11 is a plan view of a lower frame and showing an optical fiber recovery box which is optical fiber recovering means.
[Fig. 12] Fig. 12(A) is a sectional view of a fiber feeding mechanism which is optical fiber recovering means, Fig. 12(B) is a plan view of the lower frame, and Fig. 12(C) is an end view as seen in a direction C in Fig. 10(A).
[Fig. 13] Figs. 13(A) to 13(D) are schematic operation diagrams showing front and sides of the blade feeding mechanism.
[Fig. 14] Figs. 14(A) and 14(B) are schematic operation diagrams of a blade member replacement time displaying mechanism.
[Fig. 15] Fig. 15 is a plan view showing an example of a case where an optical fiber is supplied in the longitudinal direction of a frame.
[Fig. 16] Fig. 16 is a schematic diagram showing a modification of the optical fiber cutting device.
[Fig. 17] Fig. 17 is a schematic diagram showing a modification of the optical fiber cutting device.
[Fig. 18] Fig. 18 is a front view showing a first mode of the optical fiber cutting blade member of the invention.
[Fig. 19] Fig. 19 is a sectional view of a blade of the optical fiber cutting blade member of Fig. 18.
[Fig. 20] Fig. 20 is a process diagram of an optical fiber cutting method using the optical fiber cutting blade member.
[Fig. 21] Fig. 21 is a front view of the optical fiber cutting blade member after a step of Fig. 20 is ended.
[Fig. 22] Fig. 22 is a front view showing a second mode of the optical fiber cutting blade member of the invention.
[Fig. 23] Fig. 23 is a front view showing a third mode of the optical fiber cutting blade member of the invention.
[Fig. 24] Fig. 24 is a sectional view showing a fourth mode of the optical fiber cutting blade member of the invention.
[Fig. 25] Fig. 25 is a side view showing an example of a conventional optical fiber cutting device.

### Description of Reference Numerals and Signs

10, 10A, 10B optical fiber cutting device
11 optical fiber
11a initial flaw
200 upper clamp (clamp)
20L lower clamp (clamp)
30 blade member
31 blade edge
32 blade pressure setting spring
40 blade feeding mechanism (updating mechanism)
42 blade member recovery box (blade member recovering means)
50 pillow member
60 optical fiber positioning means
70 optical fiber recovery box (optical fiber recovering means)
90 buffering mechanism
120 blade feeding mechanism (updating mechanism)
130 blade member replacement time displaying mechanism
140 optical fiber cutting blade member
142 fixing hole
143 body portion
144 first angle blade (composite angle blade)
145 second angle blade (composite angle blade)
146 surface treatment layer (surface treatment)
150 optical fiber cutting blade member
151 first fixing hole (fixing hole)
152 second fixing hole (fixing hole)
160 optical fiber cutting blade member
161 chamfered portion
170 optical fiber cutting blade member
171 first angle blade (composite angle blade)
172 second angle blade (composite angle blade)

### Best Mode for Carrying Out the Invention

Hereinafter, examples of an embodiment of the optical fiber cutting device and method of the invention will be described with reference to the drawings.

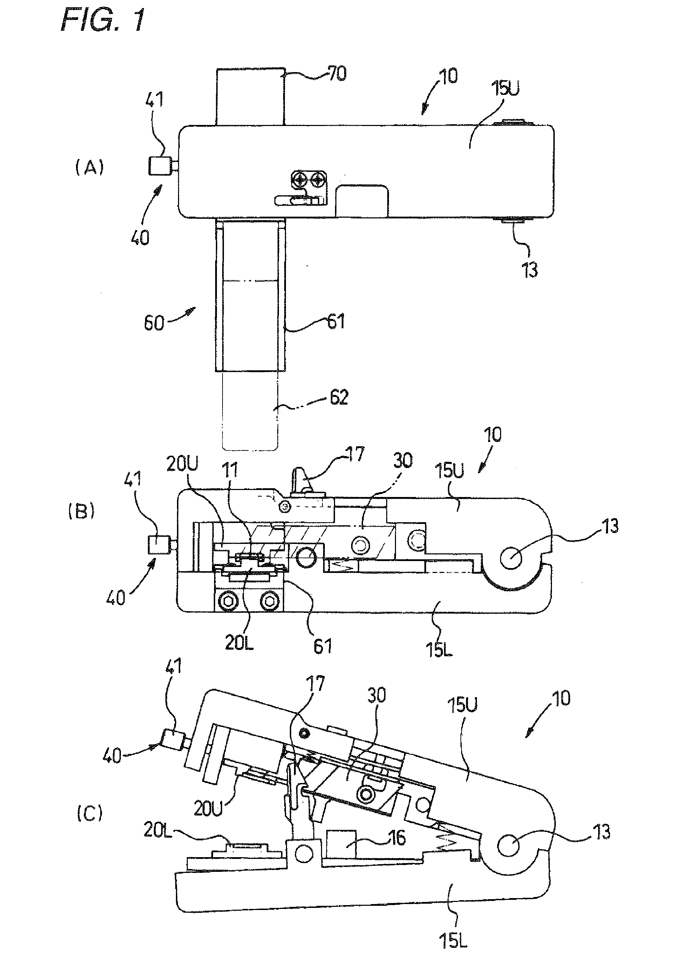

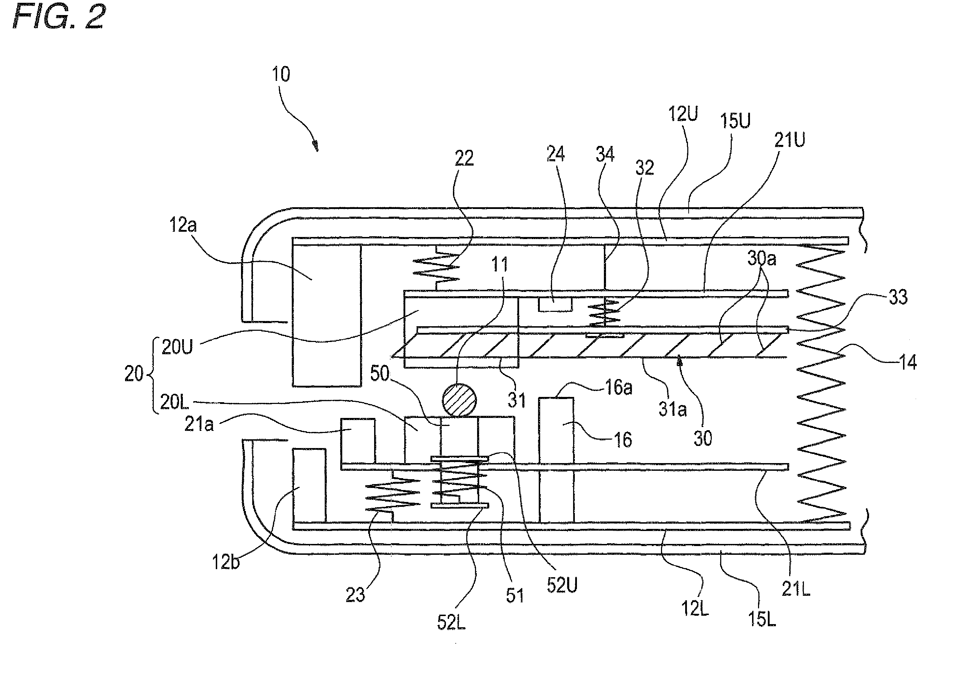

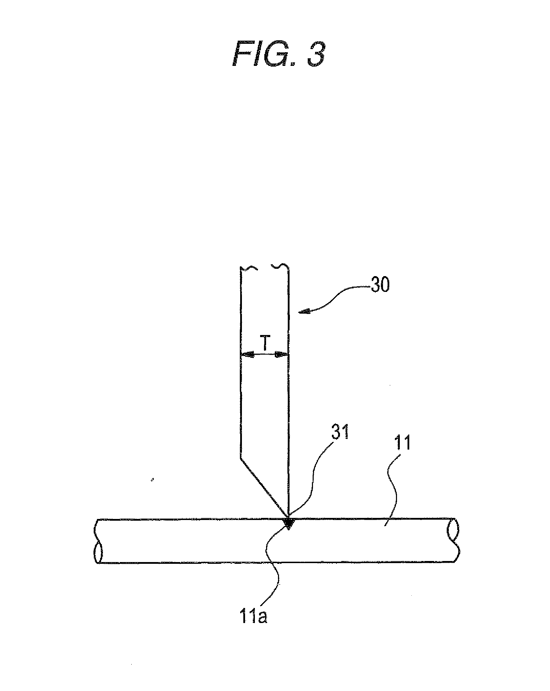

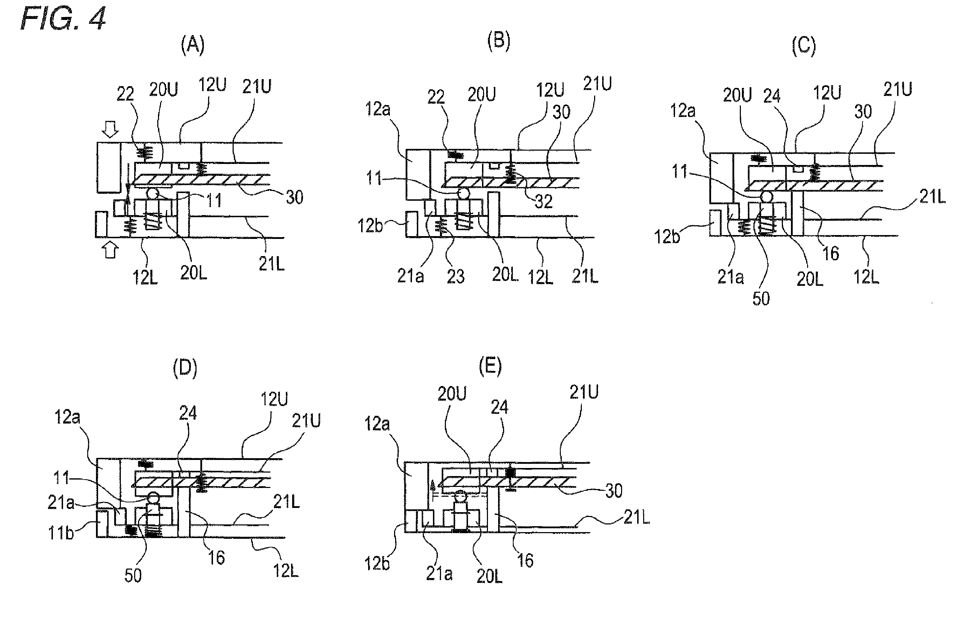

Fig. 1(A) is a plan view of an optical fiber cutting device of a first embodiment of the invention, Fig. 1(B) is a side view in the case where a cover is closed, Fig. 1(C) is a side view in the case where the cover is opened, Fig. 2 is a schematic diagram of a front portion of the optical fiber cutting device, Fig. 3 is a schematic view showing the shape of a blade edge of a blade member, and Fig. 4 is a process diagram showing a work of cutting an optical fiber.

As shown in Figs. 1 and 2, the optical fiber cutting device 10 which is the first embodiment of the invention has an upper flame 12U and a lower frame 12L. The frames 12U, 12L are swingably pivoted in one end portion by a rotation shaft 13, and urged in a direction along which the frames 12U, 12L are opened, by a spring 14 disposed between the frames 12U, 12L. In a nonuse state, as shown in Fig. 1(C), the upper flame 12U and the lower frame 12L are opened by a constant angle.
An upper cover 15U and a lower cover 15L may be disposed outside the upper flame 12U and the lower frame 12L, respectively. As shown in Fig. 1, a lock arm 17 is disposed in the lower frame 12L, so that, when a cutting operation is completed, and when the optical fiber cutting device 10 is not used, the device can be locked in a state (see Fig. 1(B)) where the upper flame 12U and the lower frame 12L are closed.

As shown in Fig. 2, inside the frames 12U, 12L, the device has: a clamp 20 which clamps a coated optical fiber 11 at both axial sides of a to-be-cut portion to fix the optical fiber 11; and a blade member 30 which presses a blade edge 31 against the to-be-cut portion of the optical fiber 11 clamped by the clamp 20, to provide an initial flaw 11a.
The device further includes: a blade feeding mechanism 40 which is an updating mechanism for updating the blade member 30 so that, during a cutting operation, an unused portion 31a of the blade edge 31 is contacted with the optical fiber 11; a pillow member 50 which presses the optical fiber 11 from the side opposite to the initial flaw provided by the blade member 30, to apply a tensile bending force, thereby breaking the optical fiber 11; and a blade pressure setting spring 32 which urges the blade member 30 toward the optical fiber 11 by a predetermined elastic urging force, to determine the size of the initial flaw 11a.

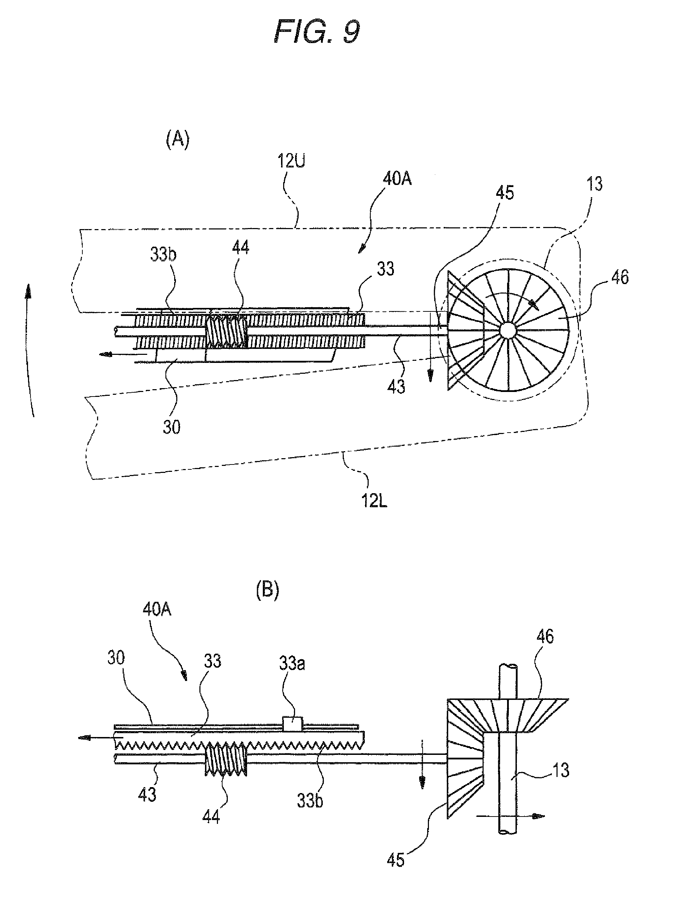

As shown in Fig. 2, the clamp 20 has upper clamps 20U and lower clamps 20L in order to vertically clamp the optical fiber 11. Each of the upper and lower clamps is separated into pieces in the axial direction of the optical fiber 11 across a cutting position (see Fig. 9). Preferably, the clamps 20U, 20L are formed by a soft material such as a resin (for example, nitrile rubber: NBR) so that the optical fiber 11 is not damaged when the optical fiber 11 (particularly, in the case of a glass fiber) is clamped.

The upper clamps 20U are attached to the lower face of the tip end of an upper clamp frame 21U, and the lower clamps 20L are attached to the upper face of the vicinity of the tip end of a lower clamp frame 21L. An upper frame guide 12a is disposed on the lower face of a tip end portion of the upper frame 12U, and a lower frame guide 12b is disposed on the upper face of a tip end portion of the lower frame 12L. The frame guides 12a, 12b are opposedly disposed to restrict the approach distance of the upper frame 12U and the lower frame 12L.
A lower clamp frame guide 21a is disposed in front of the lower clamps 20L in the lower clamp frame 21L, and the upper face of the lower clamp frame guide 21a is opposed to the lower face of the upper frame guide 12a, at a position which is higher than the upper face of the lower frame guide 12b.

Inside the upper frame 12U, the upper clamp frame 21U is disposed so as to be swingable with respect to the upper frame 12U, and connected to the upper frame 12U by an upper clamp spring 22. When the clamp is opened, therefore, the upper clamp frame 21U is held with being downward separated by a predetermined distance from the upper frame 12U.
By contrast, inside the lower frame 12L, the lower clamp frame 21L is disposed so as to be swingable with respect to the lower frame 12L, and connected to the lower frame 12L by a lower clamp spring 23. When the clamp is opened, therefore, the lower clamp frame 21L is held with being upward separated by a predetermined distance from the lower frame 12L.

As shown in Fig. 2, the blade member 30 is supported by a blade supporting frame 33 so as to be movable in the anteroposterior direction (the lateral direction as viewed in Fig. 2). The blade supporting frame 33 is hung so as to be upward movable, by a blade supporting rod 34 which is attached to the upper frame 12U, and which is passed through the upper clamp frame 21U. The height of the blade edge 31 is set at a position which is higher than the lower faces of the upper clamps 20U. The blade pressure setting spring 32 is disposed in a portion of the blade supporting rod 34 between the blade supporting frame 33 and the upper clamp frame 21U. Therefore, the blade member 30 is downward urged by the blade pressure setting spring 32 against the upper clamp frame 21U by a predetermined elastic urging force.

As shown in Fig. 3, the blade member 30 is a single-edged blade made of stainless steel and having a thickness T of 0.2 mm or more and 0.5 mm or less. When the initial flaw 11a is to be formed in the optical fiber 11, the tip end side of the optical fiber 11 which is to be discarded is placed on the tapered side (the left side in Fig. 3) of the blade edge 31, and the portion of the optical fiber 11 which is to be used is placed on the flat side (the right side in Fig. 3) of the blade edge 31. According to the configuration, the tapered side in which, in provision of the initial flaw 11a, the cutting surface of the optical fiber 11 tends to be roughened can be discarded, and a flat and smooth cutting surface can be obtained in the tip end on the use side.

As shown in Figs. 1 and 2, in the blade member 30, to-be-broken grooves 30a are formed at predetermined intervals (for example, about 0.25 mm which is equal to the outer diameter of the optical fiber) so that, each time when the blade member is used, the used portion is broken off and removed away. The blade member 30 is connected to the upper frame 12U through the blade pressure setting spring 32, and upward movable.
The blade member 30 is disposed below the upper clamp frame 21U. When the blade member is raised by a fixed distance or longer, the blade member butts against a butting member 24 which is attached to the lower face of the upper clamp frame 21U. When the blade member 30 in this state is further raised, the blade member 30 and the upper clamp frame 21U are integrally raised.

In the case of an optical fiber in which the glass fiber has a thin diameter of 80 µm, and the coated diameter is 125 µm, preferably, the elastic urging force exerted by the blade pressure setting spring 32 is 30 gf or more and 200 gf or less. In the case of an optical fiber in which the glass fiber has a standard diameter of 125 µm, and the coated diameter is 250 µm, preferably, the elastic urging force is 200 gf or more and 800 gf or less. When the blade edge 31 is pressed by a force of this range against the optical fiber 11, it is possible to cut the coating and adequately provide the glass fiber inside the coating with the initial flaw 11a.
The degrees of the spring forces of the upper clamp spring 22, the lower clamp spring 23, and the blade pressure setting spring 32 are set so as to be in the sequence of "the lower clamp spring 23 > the upper clamp spring 22 > the blade pressure setting spring 32".

As shown in Fig. 2, a blade pushing-up pin 16 is upward disposed on the lower frame 12L, and passed through the lower clamp frame 21L to be upward projected. The upper end face 16a of the blade pushing-up pin 16 can approach and butt against the blade supporting frame 33, and the blade edge 31 of the blade member 30 cannot be moved below a predetermined position.

In the lower clamp frame 21L, the pillow member 50 is disposed at a position which is opposed to the blade member 30 across the optical fiber 11, i.e., the intermediate position (see Fig. 9) of the separated lower clamps 20L. Similarly with the upper clamps 20U and the lower clamps 20L, the pillow member 50 is preferably formed by a soft material such as a resin. Alternatively, the member is formed by a material which is harder than the upper clamps 20U and the lower clamps 20L.
In the pillow member 50, an upper stopper 52U and a lower stopper 52L are disposed at a predetermined interval across the lower clamp frame 21L. The pillow member is relatively vertically movable between the stoppers 52U, 52L with respect to the lower clamp frame 21L. The pillow member 50 is downward urged by a pillow return spring 51, and, in a nonuse state, the upper stopper 52U is engaged with the lower clamp frame 21L. At this time, the height of the upper end face of the pillow member 50 is set to be slightly lower than the upper faces of the lower clamps 20L.
When the lower clamp frame 21L is downward moved by a predetermined distance or longer, the lower stopper 52L of the pillow member 50 butts against the lower frame 12L and stops there, and therefore the upper end face of the pillow member 50 is relatively higher than the upper end faces of the lower clamps 20L. Preferably, the width (the length in the axial direction of the optical fiber 11) of the upper end face of the pillow member 50 is about 2 to 5 mm.

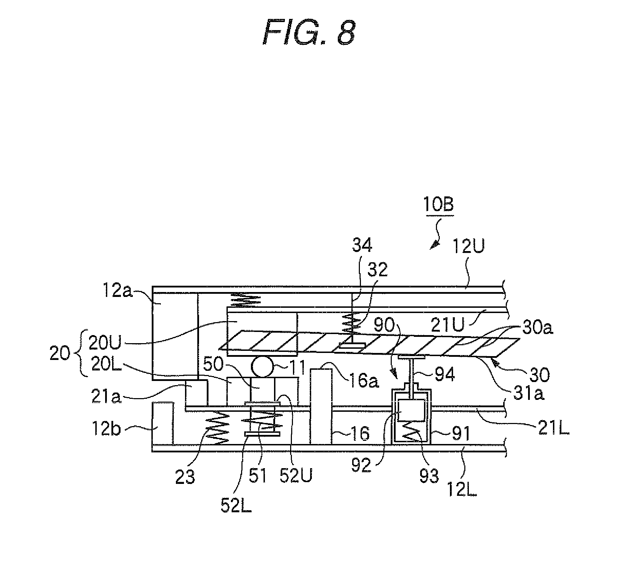

As shown in Fig. 1, a knob 41 of the blade feeding mechanism 40 is disposed on the front end of the upper frame 12U. When the knob 41 is turned, the blade member 30 is advanced (in the leftward direction as viewed in Fig. 1). When the optical fiber 11 is to be cut, therefore, the position of the blade edge 31 can be updated so that the blade edge 31 in the nonuse state is always located in the cutting position.
In the case where the used portion of the blade member 30 is broken off and removed away, it is preferable to dispose blade member recovering means 42 (see Fig. 8) for recovering the used portion. According to the configuration, it is possible to save the trouble of cleaning after the work, and prevent injury due to the cut-off blade member 30 from occurring.

As shown in Fig. 1(A), a bracket 61 is detachably attached to the outside of the lower frame 12L on the side of the optical fiber 11. Preferably, a fiber holder 62 serving as fiber positioning means 60 for setting the axial position of the to-be-cut portion of the optical fiber 11 is attached to the bracket 61. The fiber holder 62 is detachable from and attachable to the bracket 61, and movable toward the cutting position by a predetermined distance while carrying the optical fiber 11. According to the configuration, the to-be-cut position of the optical fiber 11 can be correctly cut.
For example, a magnet, a latch for coupling, and the like are disposed between the fiber holder 62 and the bracket 61, whereby the both members can be easily coupled to and separated from each other. In the case where the cutting position of the optical fiber 11 is not restricted, the fiber holder 62 may not be disposed, and simply a groove along which the optical fiber extends may be disposed.

As shown in Fig. 1(A), preferably, optical fiber recovering means 70 for accommodating cut-off fibers which are cut off by the optical fiber cutting device 10 may be detachably disposed on the outside (the upper side in Fig. 1(A) of the lower frame 12L opposite to the optical fiber 11. According to the configuration, it is possible to save the trouble of cleaning after the work, and prevent injury due to the cut-off optical fiber from occurring.

The attaching positions of the fiber positioning means 60 and the optical fiber recovering means 70 may be reversed. Therefore, the workability is excellent irrespective of the dominant hand of the worker.

Next, a cutting method using the optical fiber cutting device 10 will be described.
As shown in Fig. 4(A), the optical fiber 11 to be cut is located at a predetermined position, the worker grips the optical fiber cutting device 10 and causes the upper frame 12U and the lower frame 12L to approach each other, and the optical fiber 11 is clamped by the clamp 20 at both axial sides of the to-be-cut portion to be fixed. At this time, the blade edge 31 of the blade member 30 is above the lower faces of the upper clamps 20U, and hence the blade edge 31 is not contacted with the optical fiber 11.

As shown in Fig. 4(B), next, the upper frame 12U and the lower frame 12L are caused to further approach each other until the upper frame guide 12a and the lower clamp frame guide 21a butt against each other. At this time, the spring force of the lower clamp spring 23 which supports the lower clamp frame 21L is larger than the spring force of the upper clamp spring 22 which supports the upper clamp frame 21U, and therefore the upper clamps 20U butt against the optical fiber 11 and then are relatively pushed up while contracting the upper clamp spring 22.
Therefore, the blade edge 31 of the blade member 30 is pushed into the optical fiber 11 to provide the initial flaw 11a to the glass fiber of the optical fiber 11. At this time, the spring force of the blade pressure setting spring 32 which sets the blade pressure is smaller than the spring force of the upper clamp spring 22, and hence the initial flaw 11a is provided to the optical fiber 11 by the blade pressure (predetermined elastic urging force) which is set by the upper clamp spring 22.

As shown in Fig. 4(C), the upper frame 12U and the lower frame 12L are caused to further approach each other, and the lower clamp frame guide 21a is pushed down by the upper frame guide 12a. Therefore, the upper end face of the blade pushing-up pin 16 butts against the blade supporting frame 33, and the blade member 30 is upward retracted. The lower face of the pillow member 50 which is disposed on the lower clamp frame 21L butts against the lower frame 12L and stops there. Therefore, the pillow member 50 is relatively raised with respect to the lower clamp frame 21L which is lowered.

As shown in Fig. 4(D), when the upper frame 12U and the lower frame 12L are caused to further approach each other, and the lower clamp frame guide 21a is pushed down by the upper frame guide 12a, the pillow member 50 is further raised. Therefore, the optical fiber 11 which has been clamped by the upper clamps 20U and the lower clamps 20L is pressed by the pillow member 50 from the side opposite to the initial flaw 11a, to be pushed up, whereby a tensile bending force is applied and the optical fiber is broken at the initial flaw 11a. Furthermore, the blade member 30 is pushed up by the blade pushing-up pin 16 to butt against the butting member 24 which is attached to the upper clamp frame 21U.

As shown in Fig. 4(E), the upper frame 12U and the lower frame 12L are caused to further approach each other until the upper frame guide 12a and the lower clamp frame guide 21a butt against each other. This causes the blade pushing-up pin 16 to push up the upper clamp frame 21U through the blade supporting frame 33 and the butting member 24. Therefore, the upper clamps 20U are pushed up to cancel the clamped state of the optical fiber 11.

Thereafter, the knob 41 of the blade feeding mechanism 40 is turned, the blade member 30 is advanced (in the leftward direction as viewed in Fig. 1), and the position of the blade edge 31 is updated so that, in the next operation of cutting the optical fiber 11, the blade edge 31 in the nonuse state is always located in the cutting position.

According to the optical fiber cutting device 10 and the optical fiber cutting method of the first embodiment which has been described above, the device has the blade member 30 which presses the blade edge 31 against the to-be-cut portion of the optical fiber 11 clamped by the clamp 20, to provide the initial flaw 11a to the optical fiber. When the optical fiber is to be cut, the position of the blade member 30 is updated so that an unused portion of the blade edge 31 is contacted with the optical fiber 11. Therefore, it is not required to dispose a mechanism which, during the cutting operation, slides the blade member 30. Furthermore, the initial flaw 11a can be provided to the optical fiber 11 by using the general-purpose and economical blade member 30 which is made of stainless steel. As a result, the cutting device 10 can be reduced in size, weight, and cost.
Since the cutting operation is performed by an unused portion of the blade edge 31, the cutting quality is stabilized. The blade edge 31 of the blade member 30 is pressed against the optical fiber 11 by the predetermined elastic urging force exerted by the blade pressure setting spring 32. Therefore, the initial flaw 11a can be provided to the optical fiber 11 by an adequate blade pressure, and it is possible to prevent an excess blade pressure from being applied to the optical fiber 11. Therefore, the worker can surely cut the optical fiber 11 without requiring an adjustment of the force of the worker, only by performing an operation of griping the optical fiber cutting device 10 to cause the upper frame 12U and the lower frame 12L to approach each other, and that of then separating the frames from each other. The workability is excellent.

Next, an optical fiber cutting device of a second embodiment of the invention will be described.

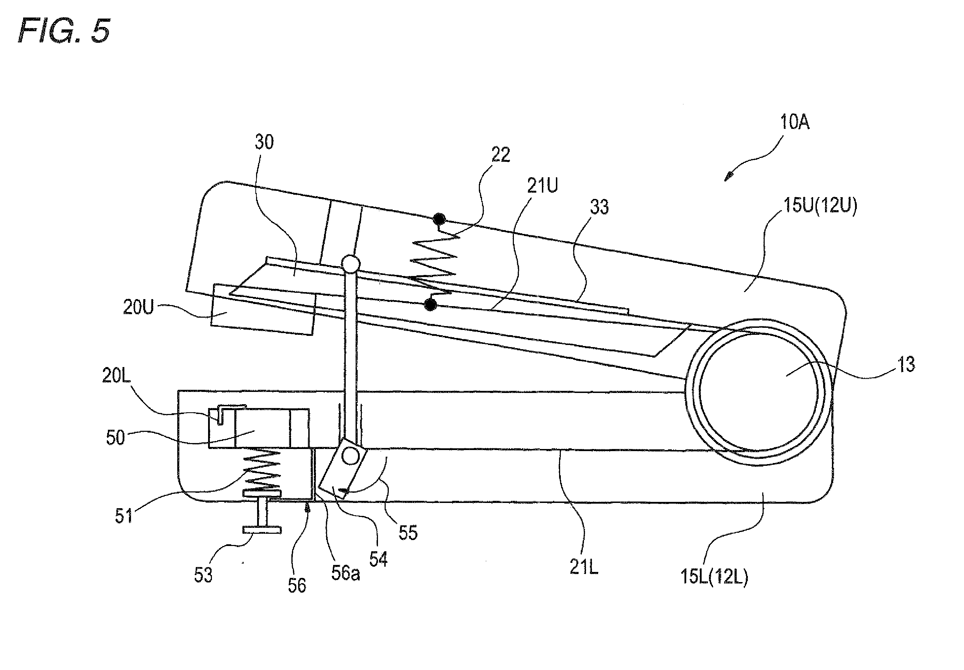

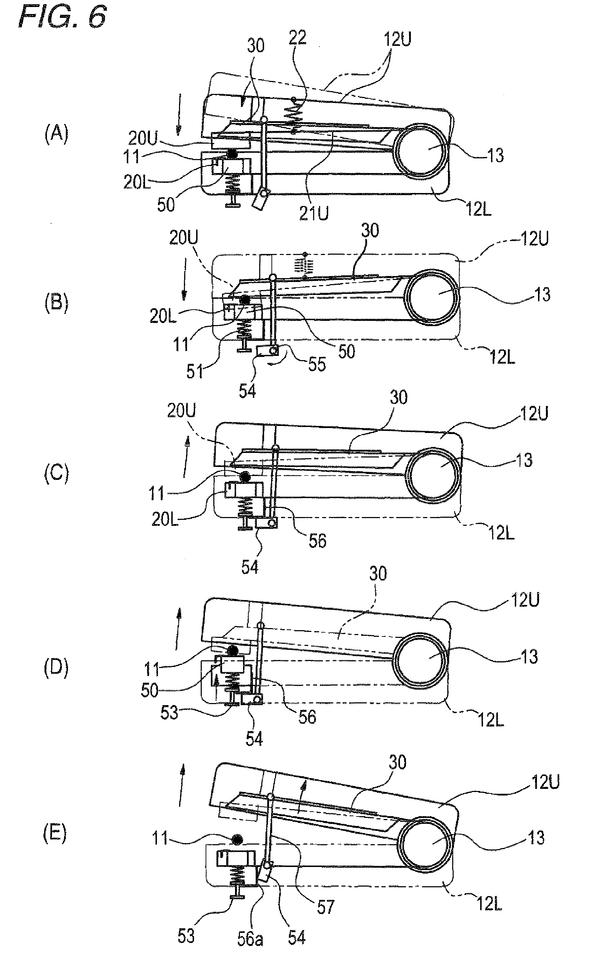

Fig. 5 is a schematic diagram showing the optical fiber cutting device of the second embodiment, and Fig. 6 is a process diagram of a work of cutting an optical fiber. Components which are common to the above-described first embodiment are denoted by the same reference numerals, and duplicated description will be omitted.

As shown in Fig. 5, the upper frame 12U and the lower frame 12L are openably coupled to each other by the rotation shaft 13. In the upper frame 12U, the upper clamp frame 21U which includes the upper clamps 20U at the tip end is disposed so as to be vertically swingable. The upper clamp frame 21U is supported on the upper frame 12U by the upper clamp spring 22. The blade supporting frame 33 is fixed to the upper frame 12U, and the blade member 30 is attached so as to be movable in the anteroposterior direction (the lateral direction as viewed in Fig. 5). Although not illustrated, the blade feeding mechanism 40 is disposed in a similar manner as the first embodiment.

In the lower frame 12L, as shown in Fig. 5, the lower clamp frame 21L which includes the lower clamps 20L at the tip end is disposed so as to be vertically swingable. The lower clamp frame 21L is supported by the lower frame 12L. In a front end portion of the lower frame 12L, a pillow unit 56 is disposed so as to be vertically movable, and the movement range is restricted by a pillow rise stopper 53 which is disposed below the pillow unit 56. Inside the pillow unit 56, the pillow member 50 is disposed so as to be vertically movable, and upward urged by the pillow return spring 51 which is a blade pressure setting spring.

The upper end of a connecting rod 57 is rotatably attached to the upper frame 12U, and a lower end portion of the connecting rod 57 is disposed so as to be vertically movable with respect to the lower frame 12L. A pillow pushing-up crank 54 is rotatably disposed on the lower end of the connecting rod 57. The crank is always urged in a clockwise direction as viewed in the figure by a crank rotation spring 55. In a non-operation state such as shown in Fig. 5, the pillow pushing-up crank 54 butts against a side face 56a of the pillow unit 56 and stops there.

Next, a cutting method using the above-described optical fiber cutting device 10A will be described.
As shown in Fig. 6(A), the optical fiber 11 to be cut is located at a predetermined position, the optical fiber cutting device 10A is gripped, the upper frame 12U and the lower frame 121, are caused to approach each other, and the optical fiber 11 is clamped by the upper clamp 20U and the lower clamps 20L. The clamping force in this case is determined by the upper clamp spring 22. The blade edge 31 of the blade member 30 is above the lower faces of the upper clamps 20U. At this time, therefore, the blade edge 31 is not contacted with the optical fiber 11.

As shown in Fig. 6(B), next, the upper frame 12U and the lower frame 12L are caused to further approach each other, and the blade edge 31 of the blade member 30 attached to the upper frame 12U is pressed against the optical fiber 11 to provide an initial flaw (see Fig. 3). At this time, the upper clamps 20U butt against the optical fiber 11 and cannot be lowered, and hence are raised while contracting the clamp spring 22 which supports the upper clamp frame 21U, with the result that the upper clamps separate from the optical fiber 11.
The side of the optical fiber 11 opposite to the side against which the blade edge 31 butts becomes to be supported by the pillow member 50. Therefore, the blade pressure by which an initial flaw is provided is determined by the pillow return spring 51. At this time, the pillow pushing-up crank 54 is downward moved, rotated by the crank rotation spring 55, and supports the lower face of the pillow unit 56.

As shown in Fig. 6(C), the gripping of the optical fiber cutting device 10A is released to allow the upper frame 12U to be raised, thereby separating the blade member 30 from the optical fiber 11. At this time, the pillow pushing-up crank 54 which is coupled to the upper frame 12U is raised in the state where it supports the pillow unit 56, and hence the pillow unit 56 is raised.

As shown in Fig. 6(D), the gripping of the optical fiber cutting device 10A is further released to allow the upper frame 12U to be raised. When the pillow pushing-up crank 54 is raised, therefore, the pillow unit 56 is raised, and the pillow member 50 pushes up the optical fiber 11. At the same time, the upper clamps 20U are pushed down by the clamp spring 22, and the upper clamps 20U which are positioned at both axial sides of the to-be-cut portion are lowered relatively with respect to the upper frame 12U.
As a result of these operations, the optical fiber 11 which has been clamped by the upper clamps 20U and the lower clamps 20L is pressed by the pillow member 50 from the side opposite to the initial flaw, to be pushed up, whereby a tensile bending force is applied and the optical fiber is broken at the initial flaw. At this time, the pillow unit 56 is raised to the top dead point, and the pillow rise stopper 53 butts against the lower frame 20L and stops there.

As shown in Fig. 6(E), when the gripping of the optical fiber cutting device 10A is completely released, the upper clamps 20U are raised to release the clamped state of the optical fiber 11. At this time, the upper frame 20U is further raised to raise the connecting rod 57, but the rising of the pillow unit 56 is blocked by the pillow rise stopper 53 (see Fig. 6(D)). Therefore, the pillow pushing-up crank 54 is raised against the urging force of the crank rotation spring 56 while rotating in a counterclockwise direction as viewed in the figure, and butts against the side face 56a of the pillow unit 56 and stops there.

Thereafter, the blade member 30 is advanced by the blade feeding mechanism 40, and the position of the blade edge 31 is updated so that, in the next operation of cutting the optical fiber 11, the blade edge 31 in the nonuse state is always located in the cutting position.

According to the optical fiber cutting device 10A and the optical fiber cutting method of the second embodiment which has been described above, in a similar manner as the above-described first embodiment, an initial flaw can be provided to the optical fiber 11 by using the general-purpose and economical blade member 30 which is made of stainless steel. As a result, the cutting device 10A can be reduced in size, weight, and cost.
Since the cutting operation is performed by an unused portion of the blade edge 31, the cutting quality is stabilized. The blade pressure by which the blade edge 31 of the blade member 30 is pressed against the optical fiber 11 is set to the predetermined elastic urging force exerted by the pillow return spring 51 which supports the pillow member 50. Therefore, an initial flaw can be provided to the optical fiber 11 by an adequate blade pressure, and it is possible to prevent an excess blade pressure from being applied to the optical fiber 11.
Therefore, the worker can surely cut the optical fiber 11 without requiring an adjustment of the force of the worker, only by performing an operation of griping the optical fiber cutting device 10A to cause the upper frame 12U and the lower frame 12L to approach each other, and that of then separating the frames from each other. The workability is excellent.

Next, an optical fiber cutting device of a third embodiment of the invention will be described.

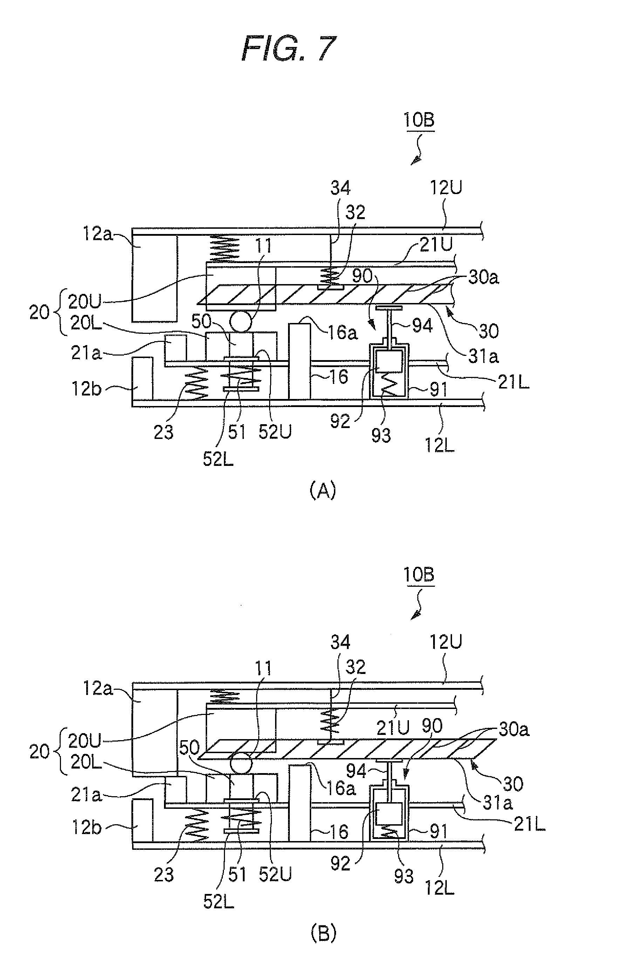

Fig. 7(A) is a schematic sectional view of main portions of the optical fiber cutting device of the third embodiment, Fig. 7(B) is a schematic sectional view of main portions and illustrating a cutting operation at an optimum speed in the optical fiber cutting device of the third embodiment, and Fig. 8 is a schematic sectional view of main portions and illustrating a cutting operation at an inadequate speed in the optical fiber cutting device of the third embodiment.

In the optical fiber cutting device 10B of the third embodiment, as shown in Fig. 7(A), a buffering mechanism 90 which controls the speed of the flaw provision due to the blade member 30 is attached onto the lower frame 12L.

In the buffering mechanism 90, a piston 92 which is urged by a return spring 93 is housed in a cylinder 91, and a blade member butting member 94 is coupled to the piston 92. In place of the return spring 93, oil or fluid having a predetermined viscous pressure may be filled in the cylinder 91.
Alternatively, it may be used together with the return spring 93.

The buffering mechanism 90 applies the resistance force accumulated in the return spring 93, in the direction opposite to the movement direction of the blade member butting member 94, thereby performing a work (force × distance) to control the energy of the blade member 30. Specifically, in the case where the approaching speed of the frame 12U to the lower frame 12L is lower than a predetermined value (for example, 3 to 30 mm/sec), the provision of the initial flaw 11a (see Fig. 3) which is to be performed by the blade member 30 to the optical fiber 11 is allowed. By contrast, in the case where the approaching speed of the frame 12U to the lower frame 12L is higher than the predetermined value, the provision of the initial flaw which is to be performed by the blade member 30 to the optical fiber 11 is inhibited, and the blade member 30 is retracted. Therefore, the blade pressure exerted by the blade member 30 is set to 0.5 N to 8 N.

Next, a cutting method using the optical fiber cutting device 10B will be described with reference to Fig. 7(B) and 8.

As shown in Fig. 7(B), the upper frame 12U and the lower frame 12L are caused to approach each other until the upper frame guide 12a and the lower clamp frame guide 21a butt against each other. After butting against the optical fiber 11, the upper clamps 20U are relatively pushed up while contracting the upper clamp spring 32. At this time, in the case where the approaching speed of the upper frame 12L to the lower frame 12L is lower than or equal to the predetermined value, when the blade member 30 butts against the blade member butting member 94 of the buffering mechanism 90, the blade member butting member 94 of the buffering mechanism 90 does not push down the piston 92. Therefore, the blade edge 31 of the blade member 30 is pushed into the optical fiber 11 to provide the initial flaw 11a (see Fig. 3) to the glass fiber of the optical fiber 11.

As shown in Fig. 8, the upper frame 12U and the lower frame 12L are caused to approach each other until the upper frame guide 12a and the lower clamp frame guide 21a butt against each other. After butting against the optical fiber 11, the upper clamps 20U are relatively pushed up while contracting the upper clamp spring 32. At this time, in the case where the approaching speed of the frame 12U to the lower frame 12L is higher than or equal to the predetermined value, when the blade member 30 butts against the blade member butting member 94 of the buffering mechanism 90, the blade member butting member 94 of the buffering mechanism 90 pushes down the piston 92. Therefore, the blade edge 31 of the blade member 30 is not pushed into the optical fiber 11, and does not provide an initial flaw to the glass fiber of the optical fiber 11.

In the case where the approaching speed of the upper frame 12L to the lower frame 12L is higher than or equal to the predetermined value, an initial flaw is not provided to the optical fiber 11, and the optical fiber 11 is not injured. Therefore, the approaching speed is readjusted, and then the cutting operation is again performed.

The optical fiber cutting device 10B and the optical fiber cutting method of the third embodiment which has been described above attain the effects of the above-described first embodiment, and hence their description is omitted. According to the embodiment, particularly, also the bending speed can be controlled by the control of the speed of the flaw provision by the buffering mechanism 90. Therefore, a sure cutting operation can be performed.

Next, an example of a blade feeding mechanism which can be commonly applied to the optical fiber cutting devices of the above-described first, second, and third embodiments will be described. Fig. 9(A) is a side view of the blade feeding mechanism, and Fig. 9(B) is a plan view of the blade feeding mechanism.

As shown in Fig. 9, the blade feeding mechanism 40A automatically feeds the blade member 30 in conjunction with one cutting operation, to update an unused portion to the cutting position. The blade member 30 is attached to the blade supporting frame 33 by a fixing member 33a. A rack gear 33b is formed in the side face of the blade supporting frame 33 opposite to the side where the blade member 30 is attached. A rotation shaft 43 is rotatably disposed in parallel to the blade supporting frame 33. A worm gear 44 which meshes with the rack gear 33b of the blade supporting frame 33 is integrally attached to an intermediate position of the rotation shaft 43.
A first bevel gear 45 is integrally attached to the rear end (the right end in Fig. 9) of the rotation shaft 43. On the other hand, a second bevel gear 46 which meshes with the first bevel gear 45 is integrally disposed on the rotation shaft 13. The rotation shaft 13 is attached to the frames 12U, 12L through one-way clutches (not shown), and the second bevel gear 46 is rotatable only in one direction.

In a cutting operation, when the upper frame 12U and the lower frame 12L are caused to approach each other and then separate from each other, the rotation shaft 13 is rotated in one direction in accordance with the separating operation, and hence the second bevel gear 46 is rotated in one direction. As a result, the first bevel gear 45 which meshes with the second bevel gear 46 is rotated in one direction, the rotation shaft 43 is rotated, and the worm gear 44 is rotated in one direction. The rotation of the worm gear 44 causes the rack gear 33b which meshes with the worm gear 44 is moved only in the forward direction (the leftward direction as viewed in Fig. 7), and the blade member 30 is forward moved.
In this case, preferably, the movement distance of the blade member 30 caused by one opening and closing operation of the upper frame 12U and the lower frame 12L is set to be equal to the intervals (about 0.25 mm) of the to-be-broken grooves 30a which are disposed in the blade member 30. When the blade member 30 is moved to the forward end and the whole portion has been used, the blade supporting frame 33 can be again moved the origin position (the end portion on the side of the rotation shaft 13).
According to the configuration, also the movement (the updation of the blade edge) of the blade member 30 is performed by the series of operations of the cutting work. Therefore, the cutting operation is always performed by using an unused portion of the blade member 30, and hence the workability can be improved.

Next, an example of blade member recovering means which can be commonly applied to the optical fiber cutting devices of the above-described first, second, and third embodiments will be described.

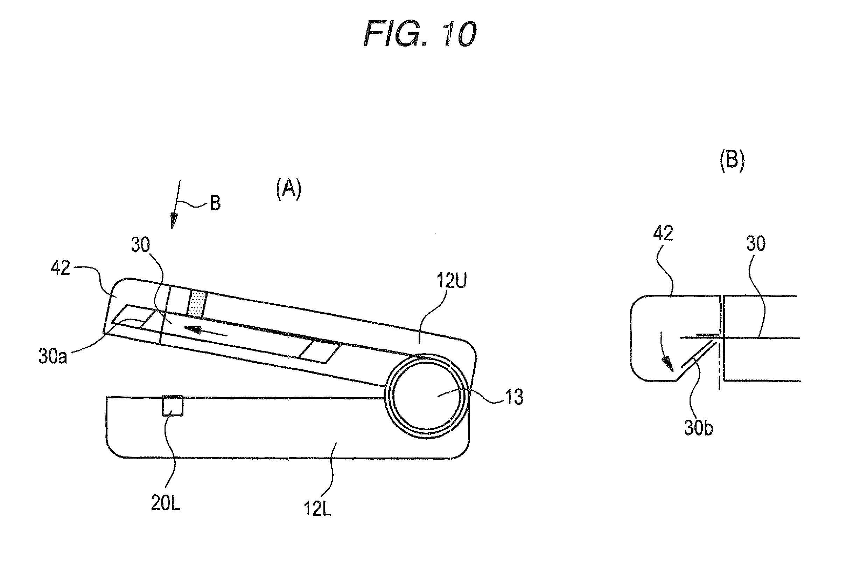

Fig. 10(A) is a side view showing the blade member recovering means, and Fig. 10(B) is a plan view as seen in a direction B in Fig. 10(A).

In the optical fiber cutting device, preferably, the effective use length of the blade member 30 is accommodated in the frame 12. In the case where the used portion of the blade member is projected from the frame 12, such as the case where a long blade member 30 is used, however, it is preferable to use the blade member recovering means shown in Fig. 8.

As shown in Fig. 10(A), a blade member recovery box 42 serving as the blade member recovering means is disposed in the tip end of the upper frame 12U so as to be swingable with respect to the upper frame 12U. A tip end portion having a length corresponding at least to the intervals of the to-be-broken grooves 30a of the blade member 30 housed in the upper frame 12U can be straightly inserted into the blade member recovery box 42.
As shown in Fig. 10(B), when the blade member recovery box 42 is swung in a state where the tip end portion is inserted, the tip end portion of the blade member 30 can be broken at the position of the to-be-broken groove 30a. The broken blade member 30a is housed as it is in the blade member recovery box 42. Therefore, the used portion of the blade member 30 can be recovered easily and safely.

Next, an example of optical fiber recovering means which can be commonly applied to the optical fiber cutting devices of the above-described first, second, and third embodiments will be described.

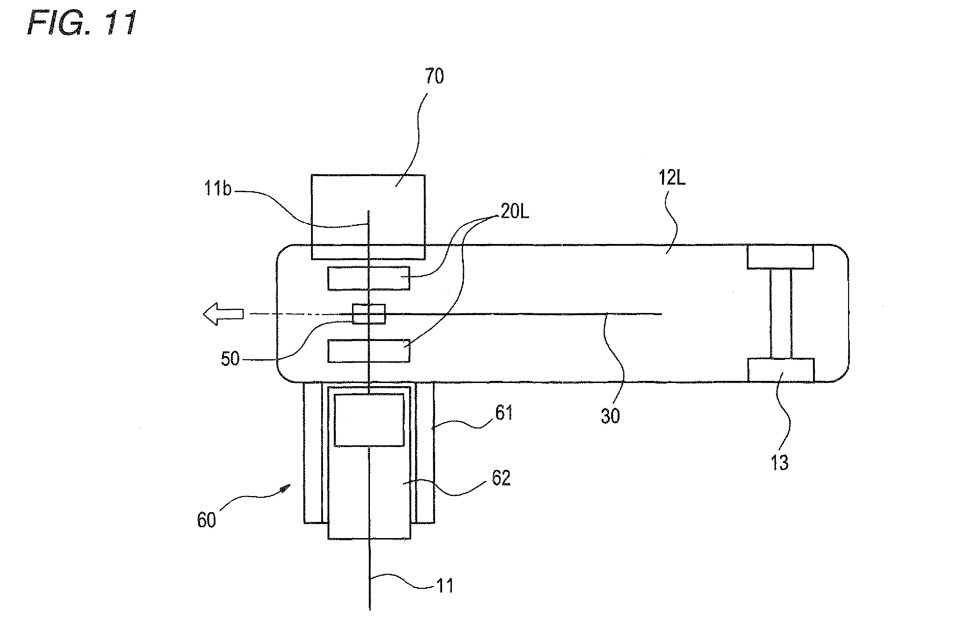

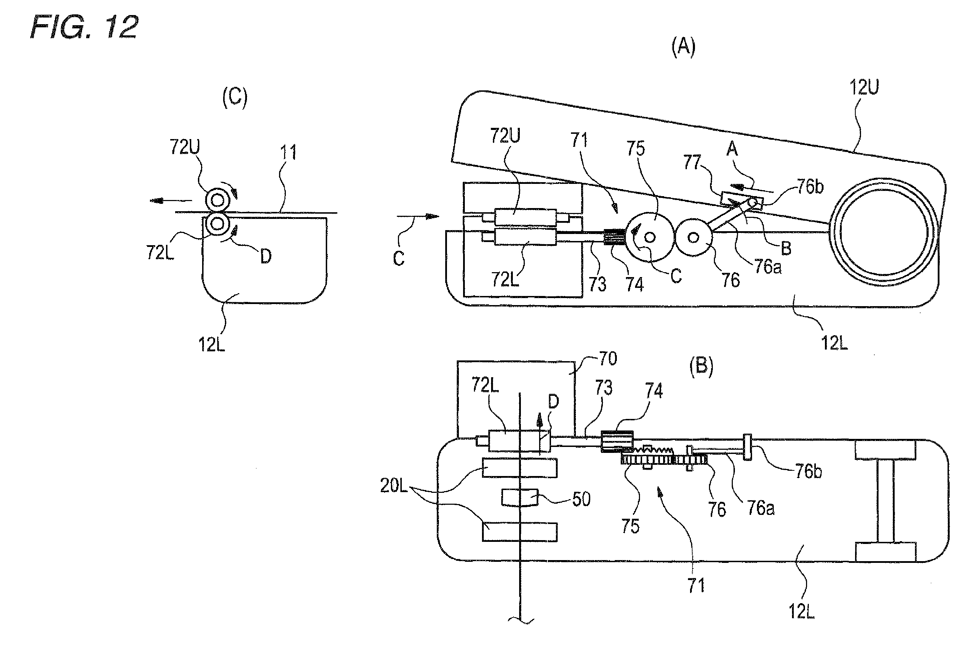

Fig. 11 is a plan view of a lower frame and showing an optical fiber recovery box which is the optical fiber recovering means, Fig. 12(A) is a side view of a fiber feeding mechanism which is the optical fiber recovering means, Fig. 12(B) is a plan view of the lower frame, and Fig. 12(C) is an end view as seen in a direction C in Fig. 12(A).

In the optical fiber recovering means, as shown in Fig. 11, the optical fiber recovery box 70 is detachably disposed on the outside of a tip end portion of the lower frame 12L (the upper side in Fig. 9) and below the axis of the optical fiber 11.
A cut-off optical fiber 11b drops to be accommodated in the optical fiber recovery box 70. It is possible to save the trouble of cleaning after the cutting work, and prevent injury due to the cut-off optical fiber 11b from occurring.

As shown in Fig. 12, the fiber feeding mechanism 71 which feeds the cut-off optical fiber 11b to be recovered into the optical fiber recovery box 70 may be disposed as the optical fiber recovering means. The fiber feeding mechanism 71 has rotatably a pair of upper and lower rubber coated rollers 7.2U, 72L in a side end portion of the lower frame 12L. The upper roller 73U is contacted with and rotatably supported by the lower roller 73L. The lower roller 72L is attached to one end portion of a rotation shaft 73, and rotatingly driven by the rotation shaft 73. A pinion gear 74 is attached to the other end portion of the rotation shaft 73, and meshes with an idle gear 75. In the idle gear 75, teeth are projected toward the outside of the lower frame 12L from the outer peripheral edge of a disk 75a. The idle gear meshes with the pinion gear 74.
Teeth are formed also on the outer circumferential face of the disk 75a, and mesh with a crank-equipped gear 76. A crank bar 76a is integrally disposed on a rotation shaft of the crank-equipped gear 76. A slide pin 76b is disposed on the tip end of the crank bar 76a. The slide pin 76b is movable along a guide hole 77 which is disposed in the longitudinal direction in the side face of the upper frame 12U.

At the end of the cutting work, when the closed upper frame 12U is raised, the slide pin 76b is moved in the direction of the arrow A along the guide hole 77, and, in accordance with the rising of the slide pin 76b, the crank bar 76a is therefore rotated in the direction of the arrow B. Therefore, also the crank-equipped gear 76 is rotated in the direction of the arrow B to rotate the idle gear 75 in the direction of the arrow C. Consequently, the pinion gear 74 and the lower roller 72L are rotated in the direction of the arrow D (see Fig. 12(C)), and cooperates with the upper roller 72U to clamp the optical fiber 11 and discharges it, and the optical fiber is recovered into the optical fiber recovery box 70.

Next, another example of the blade feeding mechanism which can be commonly applied to the optical fiber cutting devices of the above-described first, second, and third embodiments will be described.

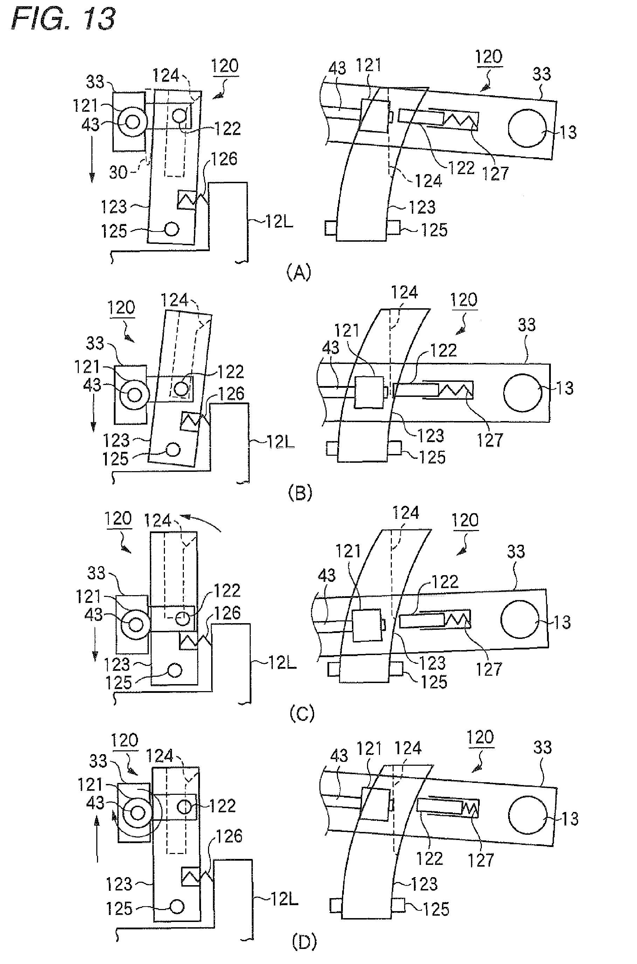

Figs. 13(A) to 13(D) are schematic operation diagrams showing front and sides of the blade feeding mechanism.

As shown in Fig. 13(A), the blade feeding mechanism 120 is configured by: a blade shaft rotation ring 121 and lever retracting pin 122 which are housed in the blade supporting frame 33 and coupled to the rotation shaft 43; and a blade shaft rotation lever 123.

The blade shaft rotation ring 121 has a lever retracting pin inserting and extracting groove 124. A pivotal axis 125 is swingably supported on the lower frame 12L, and urged by the lower frame 12L through an urging spring 126. The lever retracting pin 122 is housed through a return spring 127 so as to be housed reciprocably in the axial direction of the blade supporting frame 33.

In a raised position of the blade member 30 shown in Fig. 13(A), the lever retracting pin 122 is placed in the lever retracting pin inserting and extracting groove 124 of the blade shaft rotation ring 121. Therefore, the blade shaft rotation ring 121 is not engaged with the blade shaft rotation lever 123.

As shown in Fig. 13(B), when the blade member 30 is lowered, the blade supporting frame 33 is lowered. Therefore, the lever retracting pin 122 is lowered in the lever retracting pin inserting and extracting groove 124, but the blade shaft rotation ring 121 remains not to be engaged with the blade shaft rotation lever 123.

As shown in Fig. 13(C), when the blade member 30 is further lowered, the lever retracting pin 122 is disengaged against the return spring 127 from the lever retracting pin inserting and extracting groove 124. Therefore, the blade shaft rotation lever 123 which is urged from the lower frame 12L by the urging spring 126 is engaged with the blade shaft rotation ring 121.

As shown in Fig. 13(D), when the blade member 30 is lowered and then begins to be raised, the blade supporting frame 33 begins to be raised, and hence the blade shaft rotation ring 121 which is engaged with the blade shaft rotation lever 123 begins to be rotated in a clockwise direction as viewed in Fig. 13(D). Therefore, the rotation shaft 43 is rotated, so that the blade member 30 is advanced.

The blade feeding mechanism 120 attains similar effects as the above-described blade feeding mechanism 40A, and hence its description is omitted. According to the blade feeding mechanism 120, particularly, the automatic blade feeding can be performed, and the structure which is very simpler than the blade feeding mechanism 40 of the first embodiment can be attained.

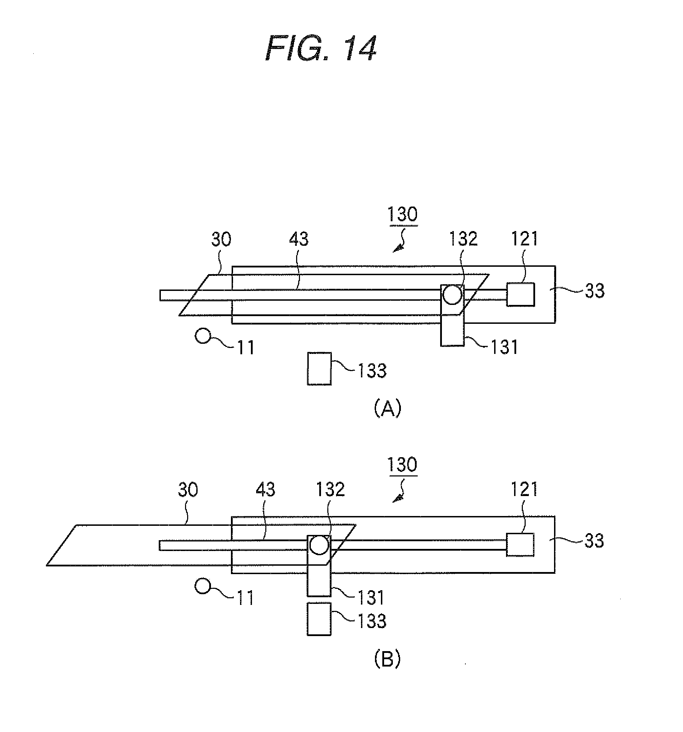

Next, an example of a blade member replacement time displaying mechanism which can be commonly applied to the optical fiber cutting devices of the above-described first, second, and third embodiments will be described. Figs. 14(A) and 14(B) are schematic operation diagrams of the blade member replacement time displaying mechanism.

In the blade member replacement time displaying mechanism 130, as shown in Fig. 14(A), a projection member 131 is fixed to an intermediate position of the rotation shaft 43 through a fixation screw 132. A projection receiver 133 is placed in front on the side of the lower frame 12L in the stroke of the projection member 131.

As shown in Fig. 14(B), the rotation of the blade shaft rotation ring 121 causes the rotation shaft 43 to be rotated, and the blade member 30 to be advanced. At this time, also the projection member 131 is advanced together with the blade member 30. In the case where the used length of the blade member 30 reaches the length at which the blade member is to be replaced, when the blade member 30 is lowered in order to perform the cutting operation, the projection member 131 butts against the projection receiver 133, and the blade member 30 is not further advanced. This informs the worker that the blade member 30 reaches the replacement time.

According to the blade member replacement time displaying mechanism 130, the replacement time of the blade member 30 can be informed to the worker. When replacement of the blade member 30 is in advance performed, the cutting work can be performed without causing a failure.

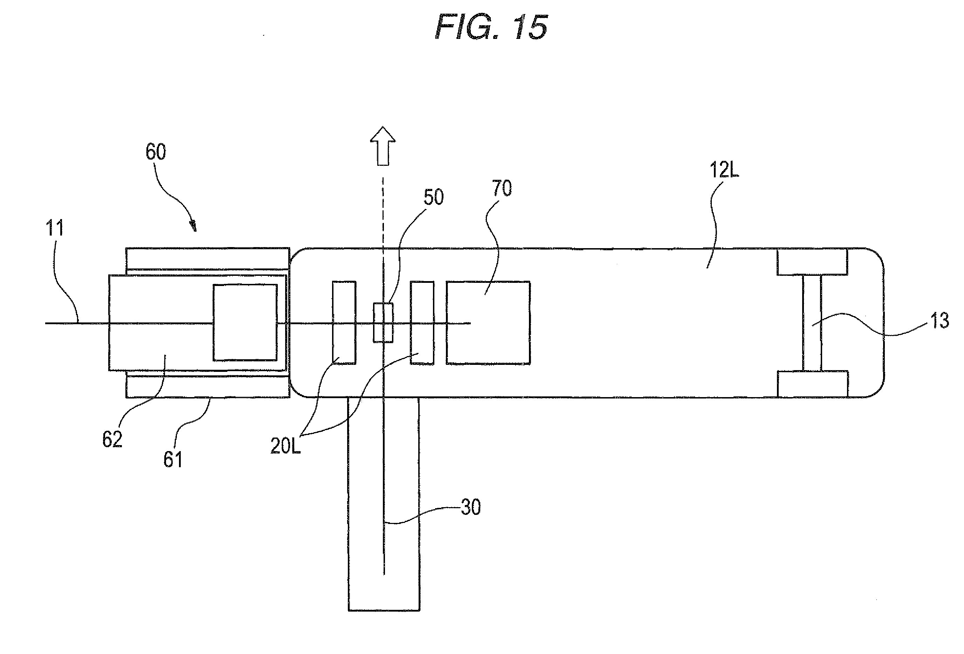

In the optical fiber cutting device and method of the invention, the configurations of the above-described embodiments can be adequately changed.
In the above-described embodiments, for example, the case where the optical fiber 11 to be cut is placed in a direction perpendicular to the longitudinal direction of the frames 12U, 12L and then cut has been described. As shown in Fig. 15, alternatively, the optical fiber 11 to be cut may be placed in the longitudinal direction of the frames 12U, 12L. In this case, the blade member 30 is disposed in a direction perpendicular to the longitudinal direction of the frames 12U, 12L, and the optical fiber recovery box 70 is disposed inside the lower frame 12L.

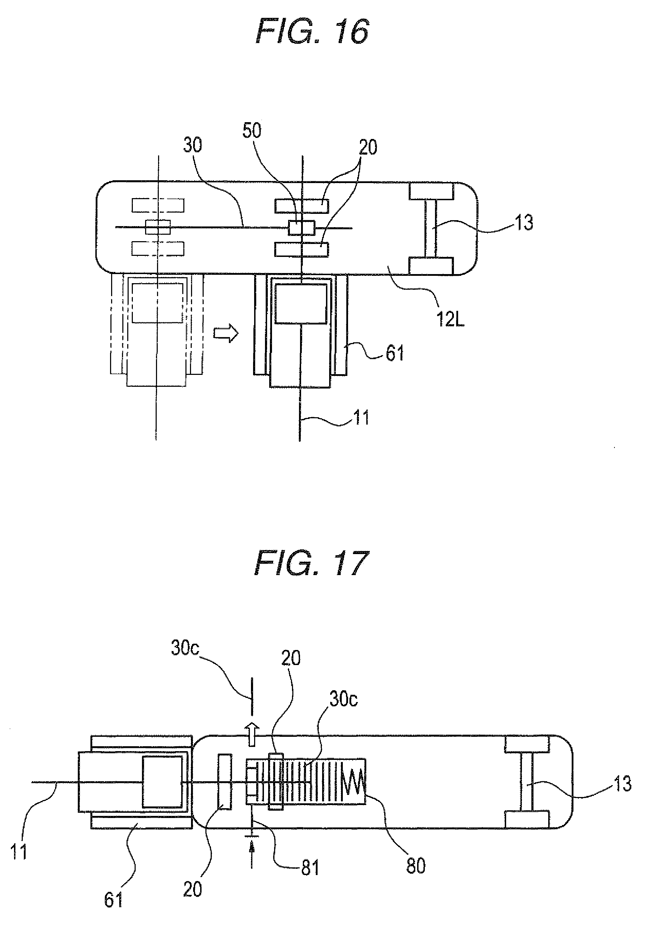

In the above-described embodiments, the blade feeding mechanisms 40, 40A which moves the blade member 30 have been exemplified as the updating mechanism for, during a cutting operation, causing an unused portion of the blade edge to be contacted with the optical fiber. Alternatively, a mechanism may be used in which the blade member 30 is fixed at a given position, and the position of the clamp 20 is updated in each cutting operation. As shown in Fig. 16, for example, a configuration where the blade feeding mechanism 40 is not disposed, and the clamp 20, the pillow member 50, the bracket 61, and the like are movable along the longitudinal direction of the blade member 30 may be employed.

In the above-described embodiments, the optical fiber 11 is cut with an unused portion of the blade edge 31 by moving the one long blade member 30. Alternatively, a cartridge for housing a plurality of blade members 30 which are previously cut to a length that is used in one cutting operation may be used. As shown in Fig. 17, when a cartridge 80 which houses a plurality of short blade members 30c is used, for example, the cartridge 80 is housed inside the device body, and hence miniaturization is enabled. The blade members 30c can be replaced (updated) by manually or automatically pushing out a used blade member 30c by a pushing out pin 81.

In the above-described embodiments, the case where the coated optical fiber 11 is cut has been described. The invention can be similarly applied also to the cutting of a glass fiber which is not covered by coating.

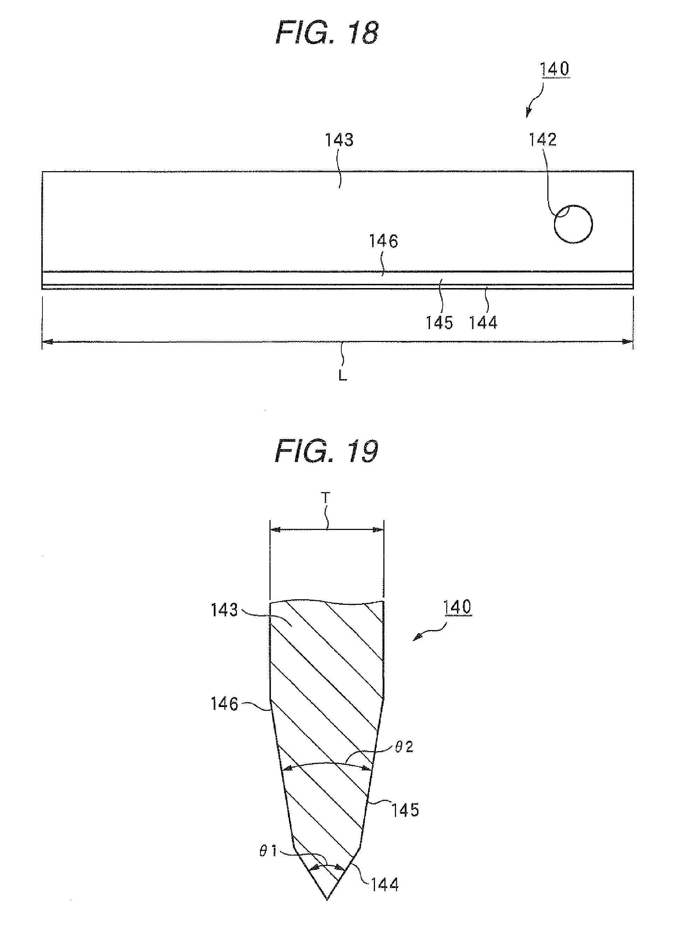

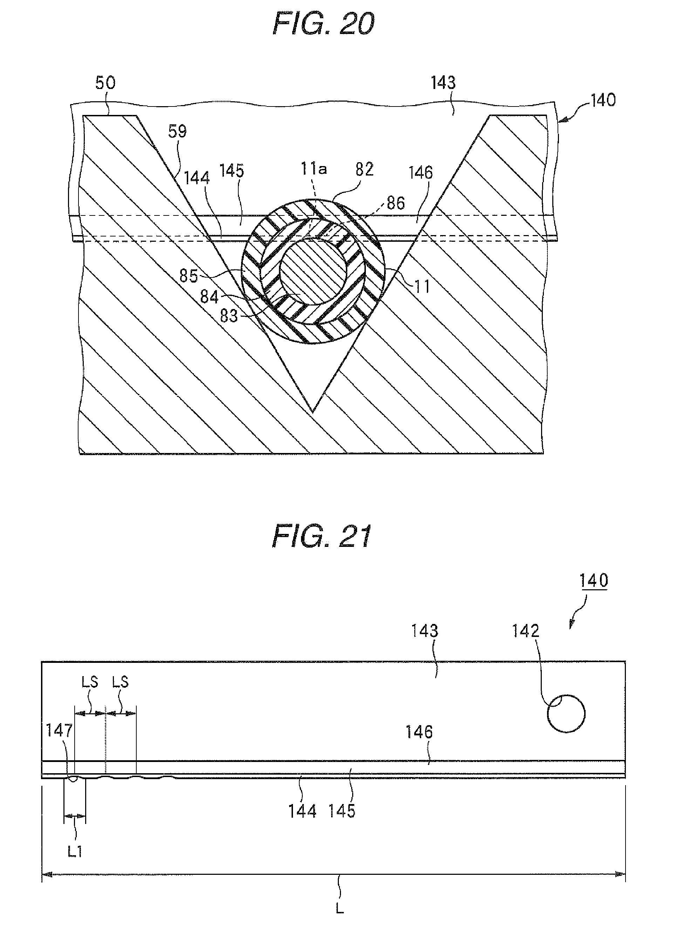

Next, the optical fiber cutting blade member of the invention will be described in detail. Fig. 18 is a front view showing a first mode of the optical fiber cutting blade member of the invention, Fig. 19 is a sectional view of a blade of the optical fiber cutting blade member of Fig. 18, Fig. 20 is a process diagram of an optical fiber cutting method using the optical fiber cutting blade member, and Fig. 21 is a front view of the optical fiber cutting blade member after a step of Fig. 20 is ended.

As shown in Figs. 18 and 19, the optical fiber cutting blade member 140 of the mode is made of stainless steel such as SK steel (SK 420), high-speed steel, SUS (martensite (SUS 420, etc.)), or the like, and has a total length L of 30 to 50 mm, and a thickness T of 0.1 to 0.5 mm.
In the blade member 140, a fixing hole 142 is formed in one end portion of a body portion 143 having a flat plate-like shape. In the optical fiber cutting blade member 140, the blade edge portion includes: a first angle blade 144 which, in a tip end portion, constitutes one of a composite angle blade; and a second angle blade 145 which, on the side of the body portion 143 in the tip end portion, constitutes the other of the composite angle blade. In the first angle blade 144, the length is 30 to 40 µm, and the blade edge angle θ1 is 30 to 35 degrees. A surface treatment layer 146 in which, for example, a surface treatment such as a DLC (Diamond Like Carbon) coating, or a titanium coating (titanium nitride, titanium nitride carbide, titanium aluminum nitride, etc.) is applied is disposed on the surfaces of the first angle blade 144 and the second angle blade 145. The surface treatment may be applied only on the first angle blade 144.

As shown in Fig. 20, the first angle blade 144 is harder than a secondary coating portion 85 and a primary coating portion 84, and harder than a glass fiber 83 as far as possible. Namely, the blade is set to a hardness of Vickers hardness HB > 300 at which low friction is produced with respect to the secondary coating portion 85 and the primary coating portion 84, and high hardness is obtained with respect to the glass fiber 83.
The first angle blade 144 is advanced toward the optical fiber 11, and an incision 86 is formed in a range from the secondary coating portion 85 of the optical fiber 11 to the primary coating portion 84. When the blade is further advanced, the blade passes through the incision 86 to provide the glass fiber 83 with the initial flaw 11a.

The second angle blade 145 is set to have a hardness equivalent to that of the first angle blade 144. In order to prevent the secondary coating portion 85 and primary coating portion 84 which are broken by forming the incision 86 by the first angle blade 144, from being largely rolled up, the second angle blade 145 is set to have a blade edge angle θ2 of 10 to 20 degrees which is smaller than the first angle blade 144.

Next, an optical fiber cutting method using the optical fiber cutting blade member 140 will be described with reference to Fig. 20.
First, the optical fiber 11 is held in an optical fiber holding groove 59 of the pillow member 50. Next, the blade member 140 is downward pressingly advanced. Therefore, the optical fiber 11 is downward pressed to be pressingly moved toward an apex portion of the optical fiber holding groove 59. Then, the first angle blade 144 of the blade member 140 bites the secondary coating portion 85 of the optical fiber 11, and the incision 86 extending from the secondary coating portion 85 to the primary coating portion 84 is formed. The cutting depth (blade advancing distance) of the incision 86 is 35 to 50 µm.
At this time, the pillow member 50 butts against the optical fiber 11 through the blade pressure setting spring, and hence the cutting depth of the incision 86 with respect to the optical fiber 11 is set.

Next, the blade member 140 is further pressingly advanced into the optical fiber 11 in which the incision 86 is formed by the first angle blade 144 of the blade member 140. Therefore, the initial flaw 11a having a depth of, for example, about 1 µm is provided to a part of an outer circumferential portion of the glass fiber 83 of the optical fiber 11. At this time, in the blade member 140 which is advanced to the glass fiber 83, the second angle blade 145 restricts the secondary coating portion 85 and primary coating portion 84 which are broken by forming the incision 86, from being largely rolled up.

Then, the pillow member 50 is raised by the blade pressure setting spring, whereby bending stress is applied to the optical fiber 11 in which the initial flaw 11a is provided to the glass fiber 83. Therefore, the glass fiber 83 is cut at a cut portion 82 together with the secondary coating portion 85 and the primary coating portion 84.

In the optical fiber cutting blade member 140 which has provided the glass fiber 83 with the initial flaw 11a, as shown in Fig. 21, a part of the first angle blade 144 is nicked by butting of the first angle blade 144 against the outer circumferential portion of the glass fiber 83. In the case of a coated optical fiber of φ = 250 µm in which the glass fiber has φ = 125 µm, for example, blade nicks have a height of 5 to 20 µm, a length L1 of 50 to 100 µm, and edge deformation of 5 to 10 µm.
As a result of the blade nicks, arcuate plastic deformed portions 147 which are similar to the outer shape of the glass fiber 83 are formed, and the minute initial flaw 11a is provided to the surface of the glass fiber 83. When the blade is deformed in this way, the metal portion is contacted with a wide range of the periphery of the optical fiber 11 to produce injuries, whereby the cutting accuracy can be enhanced.

Then, the optical fiber cutting blade member 140 which has formed the incision 86 in the secondary coating portion 85 and the primary coating portion 84 and provided the glass fiber 83 with the initial flaw 11a is advanced by a stroke distance LS of 0.5 mm. Therefore, a new first angle blade 144 which is to be used in the next cutting work is created.

The optical fiber 11 which has been cut in this way is housed in a housing which is not shown, and then the housing is coupled to a ferrule which is not shown, and in which a short fiber (not shown) is housed, whereby the optical fiber is optically connected to the short fiber to constitute an optical connector.

As described above, according to the optical fiber cutting blade member 140 of the mode, the glass fiber 83 of the optical fiber 11 is provided with the initial flaw 11a while forming the incision 86 in the coating portions 84, 85 of the optical fiber 11. In this case, the blade member is advanced toward the optical fiber 11, so that, in the composite angle blade, the first angle blade 144 at the tip end first forms an incision in the coating portions 84, 85.
Next, the second angle blade 145 which, in the composite angle blade, is on the side of the body portion 143 cuts the coating portions 84, 85 while preventing rolling-up. Thereafter, the first angle blade 144 at the tip end reaches the glass fiber 83 to provide the initial flaw 11a. Without using a super-hard blade or the like which is as hard as the glass fiber 83, therefore, a cutting operation can be performed in which the cutting property of the coating portions 84, 85 is compatible with the cutting property of the glass fiber 83. Consequently, a sure cutting operation which is relatively economical can be performed.

According to the optical fiber cutting blade member 140 of the mode, the first angle blade 144 having a larger angle is advanced with respect to the optical fiber 11 while forming the incision 86 in the coating portions 84, 85 of the optical fiber 11. In accordance with this, the second angle blade 145 having a smaller angle is advanced while preventing the coating portions 84, 85 from rolling up, and the first angle blade 144 reaches the glass fiber 83 to provide the fiber with the initial flaw 11a. Therefore, angles corresponding to the characteristics of the coating portions 84, 85 are adequately set, whereby a high-efficiency cutting operation can be performed while enhancing the versatility.

The optical fiber cutting blade member 140 of the mode forms the incision 86 in the coating portions 84, 85 of the optical fiber 11, and then is advanced to provide the glass fiber 83 with the initial flaw 11a In this case, the first angle blade 144 is deformed by the glass fiber 83 which is harder than the coating portions 84, 85, and provides the minute initial flaw 11a to the surface of the glass fiber 83.
Therefore, a high hardness is not requested, and an economical material can be used. When the first angle blade 144 is deformed, the first angle blade 144 is contacted with a wider range of the periphery of the glass fiber 83 to produce injuries, whereby the cutting accuracy can be enhanced.

According to the optical fiber cutting blade member 140 of the mode, the use of the fixing hole 142 in the fixation to the optical fiber cutting device 10 enables attachment and detachment with respect to the optical fiber cutting device 10 to be easily performed. Therefore, the handling in a case such as replacement can be facilitated.

According to the optical fiber cutting blade member 140 of the mode, the surface treatment layer 146 is applied at least on the first angle blade 144 and the second angle blade 145, whereby the surface can be cleaned and impurities can be prevented from adhering to the optical fiber 11. Furthermore, rust-proofing oil is not required, the hardness in the case where an initial flaw is provided can be further increased, and the fiction produced when an incision is formed in the coating portions 84, 85 can be further reduced.

The optical fiber cutting blade member 140 of the mode can be made of stainless steel which is relatively economical, and which is easily available, so that the blade is not expensive and can be applied to mass production.

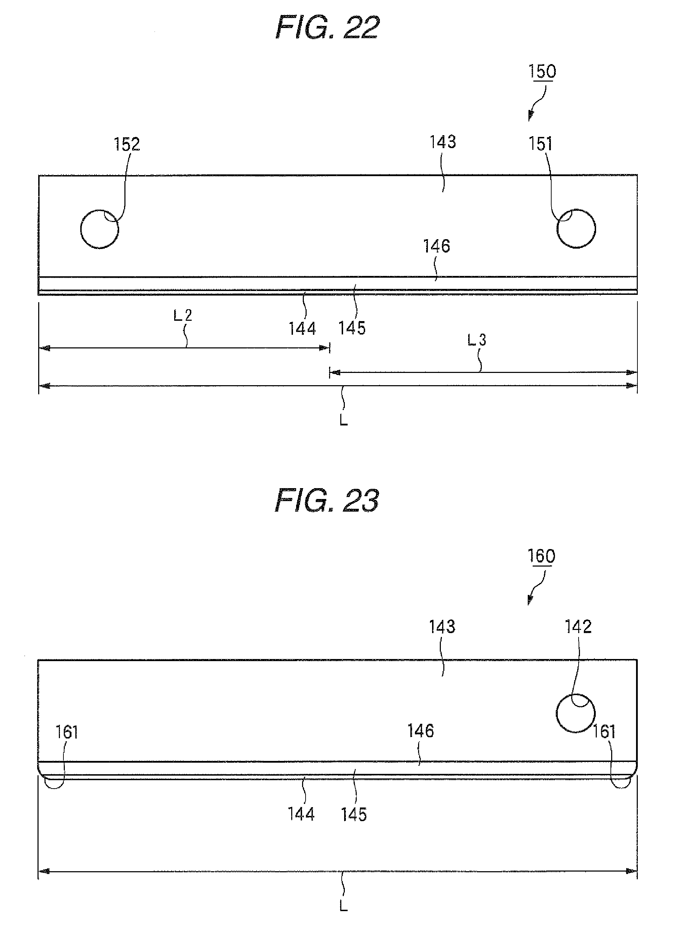

Next, a second mode of the optical fiber cutting blade member of the invention will be described with reference to Fig. 22. Fig. 22 is a front view of the optical fiber cutting blade member of the second mode. In the following embodiments, components overlapping with the above-described first embodiment are denoted by the same reference numerals in the figures, and the description will be simplified or omitted.

In the optical fiber cutting blade member 150 of the second embodiment, as shown in Fig. 22, a first fixing hole 151 and a second fixing hole 152 are formed in an end portion of the body portion 143.

The optical fiber cutting blade member 150 can be fixed from the both sides. Namely, the effective use range which extends by a length of L2 from the other end portion is set by fixing the first fixing hole 151 on one end side. When the direction is reversed, the effective use range which extends by a length of L3 from the one end portion is set by fixing the second fixing hole 152 on the other end side.

The optical fiber cutting blade member 150 of the second mode attains similar effects as the first mode. According to the optical fiber cutting blade member 150 of the mode, particularly, the first angle blade 144 and the second angle blade 145 can be effectively used without waste.

Next, a third mode of the optical fiber cutting blade member of the invention will be described with reference to Fig. 23. Fig. 23 is a front view of the optical fiber cutting blade member of the third mode.

In the optical fiber cutting blade member 160 of the third mode, as shown in Fig. 23, a chamfered portion 161 is formed in both end portions of the first angle blade 144 and the second angle blade 145. The chamfered portions 161 form arcuate end portions which are not sharp as compared with a perpendicular cutting edge.

The optical fiber cutting blade member 160 of the third mode attains similar effects as the first mode. According to the optical fiber cutting blade member 160 of the mode, particularly, the formation of the chamfered portions 161 in the one and other end portions can prevent the worker from being injured during replacement, thereby improving the handling property.

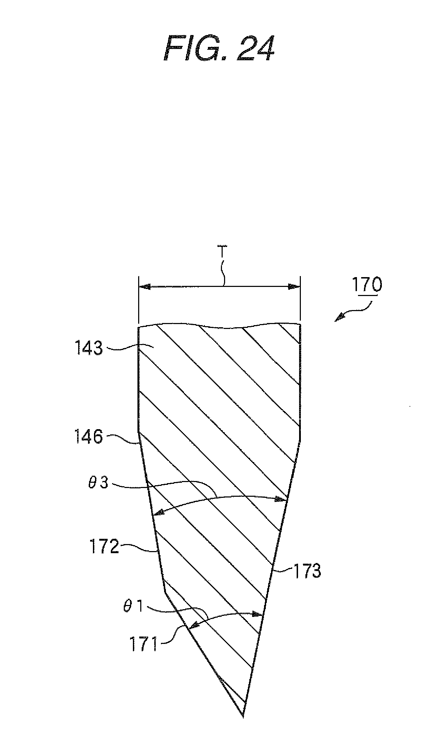

Next, a fourth mode of the optical fiber cutting blade member of the invention will be described with reference to Fig. 24. Fig. 24 is a sectional view of the optical fiber cutting blade member of the fourth mode.

In the optical fiber cutting blade member 170 of the fourth mode, as shown in Fig. 24, the blade edge portion includes a first angle blade 171 which, in a tip end portion, constitutes one of a composite angle blade, and which has a blade edge angle θ1, also includes a second angle blade 172 which, in one side of the tip end portion, constitutes the other of the composite angle blade. The blade edge portion further includes an extension blade portion 173 which has an asymmetric shape with respect to the first angle blade 171 on the other end side of tip end portion. The second angle blade 172 is set to have a blade edge angle θ3 which is slightly larger than 10 to 20 degrees.

In the optical fiber cutting blade member 170, when the incision 86 is formed in the secondary coating portion 85 and the primary coating portion 84 of the optical fiber 11, and then the glass fiber 83 is provided with the initial flaw 11a the first angle blade 171 is plastically deformed to fall down toward the extension blade portion 173. When, during the operation of cutting the optical fiber 11, the side which is not housed in the optical connector and is to be discarded is cut toward the extension blade portion 173, therefore, the first angle blade 171 is plastically deformed toward the extension blade portion 173. In accordance with this, large deformations of the secondary coating portion 85 and the primary coating portion 84 are allowed.

The optical fiber cutting blade member 170 of the fourth mode attains similar effects as the first mode. According to the optical fiber cutting blade member 170 of the mode, particularly, it is possible to designate the direction in which the first angle blade is plastically deformed, and hence the sides of the coating portions 84, 85 in which the degree of deformation is small can be used in the connecting process in the optical connector.

The optical fiber cutting blade member of the invention is not restricted to the above-described embodiments, and modification, improvement, and the like can be adequately made.
As the composite angle blade, for example, a plurality of blade edge portions such as a third blade edge portion may be formed in addition to the illustrated first and second blade edge portions. As the optical fiber, the blade member can be applied also to a bare glass fiber having no coating portion.

Although the invention has been described in detail and with reference to the specific embodiments, it is obvious to those skilled in the art that various changes and modifications can be made without departing from the spirit and scope of the invention.
The application is based on Japanese Patent Application (No. 2007-137198) filed May 23, 2007, Japanese Patent Application (No. 2007-301695) filed November 21, 2007, and Japanese Patent Application (No. 2007-301980) filed November 21, 2007, and their disclosure is incorporated herein by reference. Industrial Applicability

As described above, the optical fiber cutting device and method of the invention are useful as a optical fiber cutting machine which has a blade member that presses the blade edge against a to-be-cut portion of an optical fiber clamped by a clamp, to provide an initial flaw to the optical fiber, and in which, when the optical fiber is to be cut, the position of the blade member is updated so that an unused portion of the blade edge is contacted with the optical fiber.

## Claims

1. An optical fiber cutting device comprising:
a clamp which clamps an optical fiber at both axial sides of a to-be-cut portion to fix the optical fiber;
a blade member which presses a blade edge against the to-be-cut portion of the optical fiber clamped by said clamp, to provide an initial flaw;
an updating mechanism which updates a position of said blade member or said clamp so that, during a cutting operation, an unused portion of said blade edge is contacted with the optical fiber;
a pillow member which presses the optical fiber from a side opposite to the initial flaw provided by said blade member, to apply a tensile bending force, thereby breaking the optical fiber; and
a blade pressure setting spring which urges said blade member toward the optical fiber by a predetermined elastic urging force.

2. An optical fiber cutting device according to claim 1, wherein
said blade member is a single-edged blade having a thickness of 0.2 mm or more and 0.5 mm or less.

3. An optical fiber cutting device according to claim 1 or 2, wherein
the elastic urging force exerted by said blade pressure setting spring is 30 gf or more and 200 gf or less.

4. An optical fiber cutting device according to any one of claims 1 to 3, wherein
said blade feeding mechanism automatically changes the position of said blade member in conjunction with one cutting operation.

5. An optical fiber cutting device according to any one of claims 1 to 4, comprising:
optical fiber positioning means for setting an axial position of the to-be-cut portion of the optical fiber.

6. An optical fiber cutting device according to claim 5, wherein
said optical fiber positioning means is detachable from and attachable to a body portion of said optical fiber cutting device.

7. An optical fiber cutting device according to any one of claims 1 to 6, wherein
said device has blade member recovering means for recovering a used portion of said blade member.

8. An optical fiber cutting device according to any one of claims 1 to 7, comprising:
optical fiber recovering means for recovering the cut optical fiber.

9. An optical fiber cutting device according to any one of claims 1 to 8, further comprising:
a buffering mechanism which controls a cutting speed of said blade member.

10. An optical fiber cutting device according to claim 9, wherein
said buffering mechanism performs a control so that, when the cutting speed of said blade member exceeds a predetermined value, the initial flaw is not provided.

11. An optical fiber cutting device according to any one of claims 1 to 10, further comprising:
a blade member replacement time displaying mechanism which informs of a replacement time of said blade member.

12. An optical fiber cutting method having the steps of:
clamping an optical fiber at both axial sides of a to-be-cut portion to fix the optical fiber;
pressing a blade edge of an unused portion of a blade member against the to-be-cut portion of the optical fiber, by a predetermined elastic urging force to provide an initial flaw;
retracting said blade member from the optical fiber, and pressing a pillow member against a side of the optical fiber opposite to the initial flaw to apply a tensile bending force to the optical fiber, thereby breaking the optical fiber;
releasing the clamped state of the optical fiber produced by said clamp; and
updating a position of said blade member or said clamp so that, in a next cutting operation, an unused portion of said blade edge is contacted with the optical fiber.

13. An optical fiber cutting method according to claim 12, wherein
the optical fiber is a coated optical fiber.

14. An optical fiber cutting blade member which cuts a glass fiber or an optical fiber in which a glass fiber is placed in a coating portion, wherein
a composite angle blade having different blade edge angles is formed in a tip end of a body portion.

15. An optical fiber cutting blade member according to claim 14, wherein
said composite angle blade is configured by at least a first angle blade having a large angle, and a second angle blade having an angle which is smaller than said first angle blade.

16. An optical fiber cutting blade member according to claim 15, wherein
said first angle blade is deformed when the optical fiber is to be provided with an initial flaw.

17. An optical fiber cutting blade member according to claim 15 or 16, wherein
said first angle blade or said second angle blade is placed asymmetrically on both faces of said body portion.

18. An optical fiber cutting blade member according to any one of claims 14 to 17, wherein
a surface treatment is applied to at least said first angle blade and said second angle blade.

19. An optical fiber cutting blade member according to any one of claims 14 to 18, wherein
said member is formed by using stainless steel as a material.
